# EUROPEAN PATENT SPECIFICATION

(11) **EP 0 294 287 B1**
(45) Date of publication and mention of the grant of the patent: **29.11.2000**
(21) Application number: 88401327.7
(22) Date of filing: 01.06.1988
(51) Int. Cl.: G11B 20/18, G06F 11/10

(54) **Fault-tolerant, error-correcting storage system and method for storing digital information in such a storage system**
Gegen Fehler tolerantes, Fehler korrigierendes Speichersystem und Verfahren zur Speicherung digitaler Information in einem derartigen Speichersystem
Système de mémoire à correction d'erreur tolérant des fautes et méthode à stocker d'information numérique dans un tel système de mémoire

(30) Priority: 02.06.1987 US 57347
(43) Date of publication of application: 07.12.1988
(73) Proprietor: STORAGE COMPUTER CORPORATION, Nashua, New Hampshire 03062 (US)
(72) Inventor: Goodlander, Theodore Jay, Nashua New Hampshire 03063 (US)
(74) Representative: Maury, Richard Philip

(56) References cited:
- EP-A- 0 201 330
- GB-A- 1 578 485
- US-A- 3 876 978
- US-A- 4 425 615
- US-A- 4 849 929
- WESCON PROCEEDINGS, San Francisco, 19th - 22nd November 1985, vol. 29, pages 1- 9, New York, US; P. LA VIOLETTE et al.: "MCU architecture facilitates disk controlles design"
- Computer Technology Review, VI ( 1986 ) Summer, no. 3, Los Angeles, CA, USA, pages 133 - 139; W. D. Moren: " Intelligent Controller for Disk Drives Boosts Performance of Micros "
- Conference Record for Electro/87 and Mini/Micro Northeast-87 held on 7tth to 9th April 1987, New York, US, pages 1 to 8, B. Moren: Mass storage controllers and Multibus(r) II
- Proceedings in the fourth International Workshop on Data Base Machines, 1985, pages 300 to 329, M. Y. Kim: Parallel operation of Magnetic Disk storage devices: Synchronised Disk Interleaving

## Description

The present invention relates to mass storage devices for use with computers such as disk drives, and the like. The present invention has particular utility with disk drives used for mass storage with computers and will be described in connection with such utility. However, the benefits thereof can also be used to advantage with other mass storage devices (such as optical disks, high density RAM arrays, bubble memories, and the like).

In the present state of computer technology, disk drives of the so-called "Winchester" variety, and the like, are the primary devices employed for mass storage of programs and data. Because of their low cost, they will probably remain in wide use in the future even in the presence of more exotic devices being commercially available.

Prior art disk drives generally operate in the manner shown in Figures 1-4. As shown in Figure 1, the user CPU 10 is typically connected to a BUS 12 which, in turn, is connected to, among other things a non-intelligent system disk controller 14 for inputting to and outputting from an equally non-intelligent disk drive generally indicated as 16. The controller 14 and disk drive 16 are said to be non-intelligent in that, generally, they only do what they are asked by the user CPU 10. The disk drive 16 is connected to the controller 14 by I/O cable 18. Within the disk drive 16, there is a mechanical/electronic drive assembly 20 which positions the heads of the disk drive, does analog to digital conversion, digital to analog conversion, etc., as necessary to read and write to the storage disk 22 itself. This process is shown in more detail in Figures 2 and 3.

The storage disk 22 comprises one or more physical disks 24 which rotate about a central hub 26 as indicated by the arrow 28. Typically, for addressing purposes, the disks 24 are divided into concentric tracks 30 which, in turn, are divided into sectors 32. Any number of vertically aligned tracks 30 form a "cylinder", which is the maximum amount of data that can be read without repositioning the heads 34. The disks 24 have a sensible peripheral indicator (not shown) by which the addressing logic contained within the drive assembly 20 can determine the rotational position of the disks 24. Read/write heads 34 are positioned on the end of arms 36 connected to head positioning mechanisms 38 by which the heads 34 can be moved in and out, as indicated by the arrows 39, under the control of the drive assembly 20. To read from or write to a specific location on the disks 24, the correct head 34 is electronically selected and the arms 36 moved in unison to position all the heads 34 radially at the proper cylinder 30. The rotational position of the disks 24 is then monitored until the desired sector 32 for the read or write is under the selected head 34. At that time, the read/write takes place at a speed determined by the rotational speed of the disks 24.

Such disk drives have numerous problems that have been tolerated to date for lack of any improvement being available. For one example, head and magnetic surfacing materials technology has developed such that higher packing densities on the disk 24 are possible. That has permitted more sectors per cylinder and more cylinders per disk. This has provided higher capacities and higher speeds (relatively speaking). In this latter regard, while the electronics and other areas of disk drive technology have grown so as to permit vastly higher transfer rates, the physical rotational aspects have remained fixed so as to create a bottleneck to any meaningful increase in transfer rates. The earliest computers employed rotating drum memories as the main memory of the computer. The outer surface of the drum was coated with magnetic material and the read/write heads were permanently attached adjacent the magnetic surface. Each head represented one track of the drum with each track being divided into sectors. Addressing was by selection of a head (i.e. tract) and rotational position. Those early drum memories rotated at 3,600 rpm. Today's "high technology" disk drive still rotate at 3,600 rpm because of physical limitations which are not important to the discussion herein. Since the speed of rotation determines how fast the data can be transferred into or out of the read/write heads 34, it can be appreciated that if the rotational speed cannot increase above 3,600 rpm and bit densities are substantially maximized at their present level, there is not much potential for increasing disk drive transfer rates.

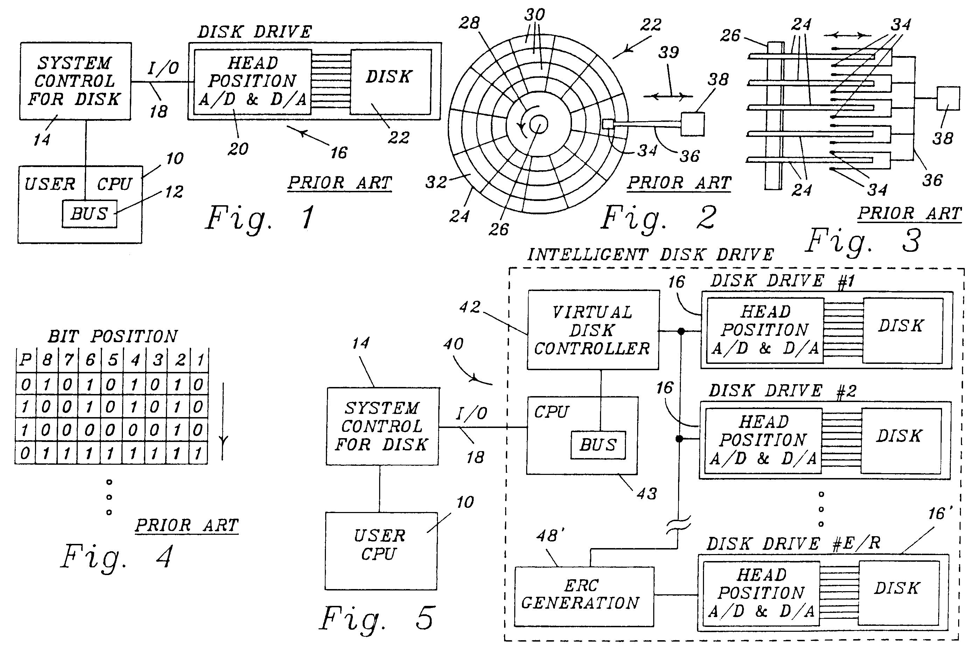

Another limitation relative to prior art disk drives such as represented by the simplified drawings of Figures 1-3 is the "seek time" associated with physically moving the arms 36 and heads 34 in and out between selected cylinders. Particularly where movements are between radial extremes (i.e. between locations close adjacent the rotating center and the periphery of the disk), the seek time for movement can be substantial; and, such time is lost time when the disks 24 are rotating beneath the head 34 but no reading or writing can take place. In the presence of repeated read and write requests between radial extremes, there is also the problem of "thrashing" that is, the arms and heads must be accelerated in one radial direction and then braked only to be accelerated back in the opposite direction and then braked once again. Where the radial distances are great, the repeated starting and stopping creates high detrimental forces on the components accomplishing the moves. This, of course, can lead to shortened life and/or failure of the drive and its components. To the System Control for Disk 14, BUS 12, and CPU 10, "seek time" appears as a wait state where no other useful work can be performed until the disk request is completed. Seek time averages the majority of the entire disk request cycle time, directly degrading the performance of CPU 10. The greater the number of I/O disk requests, the greater the degradation system performance until an "I/O" or "disk bound" condition is reached, at which point no greater system performance can be achieved.

Yet another detrimental aspect of prior art disk drive technology, which can best be appreciated with respect to Figure 4, is reliability with a corollary consideration of reconstructability; that is, how do we protect against lost data and can we reconstruct lost data? With respect to the prior art, the answers are "poorly" and "no". Figure 4 represents four consecutive eight-bit "bytes" in storage on a typical prior art disk 24. The bytes were written and are read sequentially in the form of sectors (i.e. blocks of data commonly 256, 512, 1024 or 2048 bytes long) from the top to the bottom in the direction of the arrow as the figure is viewed. Thus, the first byte is the binary number 10101010 while the last byte depicted is 11111111. To "protect" against error from a dropped or added bit during read or write, however, the prior art developed and has continued to employ a so-called "parity" bit (designated as bit position "P" in the figure) with each data entity, i.e., byte, nibble, etc., in storage. Parity schemes can be either "even" or "odd". The scheme depicted is an even parity system where the sum of the bits comprising the byte plus the parity bit must always be even in number. In the first byte (10101010) the number of "1"s is four, i.e. an even number. Thus, the parity bit is "0". when the first byte is read, the hardware sums the bits (including the parity) bit) and if the sum is even, there is no error. If a "1" bit is lost or added, the sum will be odd and a "parity error" condition will exist. Since the bit position of the bit in error is not known, however, there is insufficient information to accomplish any corrective action. Additionally, as data is transferred there is a cyclic redundancy code (CRC) associated with each serially transferred sector of data. The CRC for each sector of data is checked and a sector integrity error condition exists if the CRC test fails. With the above-described parity error within the sector, the CRC test of sector integrity will fail. Typically in such instances, the only "corrective" action taken is to repeat the read or write "n" (a pre-established value in the system) times to see if the CRC error was a transient. If the CRC error persists, the only action possible is to print an error message to the human operator asking for instructions as to how to proceed such as (DISK READ ERROR, RETRY-CONTINUE-ABORT?). Where it is desired and/or necessary to be able to reconstruct lost data, the prior art has relied upon costly and time consuming approaches like redundant disks and "backing up" or copying of the data and programs on the disk to another disk, tape, or the like. In a redundant disk system, everything is duplicated dynamically with the intention that if one disk has an error, the data will still be available on the "duplicate" disk. Disregarding the cost factor, that philosophy is all well and good until a transcient voltage spike (a common source of disk errors) causes the same erroneous data to be written on both disks simultaneously. Backup systems have been used from the very beginning of computer usage. Early systems did their backing up by punching out the data in memory on punched paper on a Teletype machine (a very time consuming project). More contemporary backup systems typically employ some sort of magnetic tape or disk technology for the storage of the data being backed up. Even so, the process is still costly and time consuming, and loses any data lost between the time of last backup and the time of the failure.

With respect to the prior art of controllers and storage devices, it should also be noted that all controllers are hardwired with respect to an associated storage device. If the size of the storage device is fixed, the controller associated with it has the size fixed in its internal logic. If the size of the storage device can vary within fixed limits and size increments, at best, the controller is able to query the storage device as to which model it is and select from pre-established sizes in its internal logic for the various models. There is no ability to automatically adapt to another size or kind of storage device other than that for which the controller was designed and constructed. If the user wants to get a new kind and/or size of device, a new controller must be obtained as well. Likewise, on the user interface side, if a new interface convention is adopted, the controller must be replaced by one having the proper interface. The same thing takes place on the storage device side - a new interface convention means a totally new controller.

With respect to the seek time problem, there has been some minor recognition of seek time as a degrader of system performance and even less attempt to provide some sort of correction to the problem. This is because the attempts have been made within the prior art controller/storage device manner of construction and operation as described above. Thus, the only commercially viable attempt at such seek time reduction has been the interposing of "round robin"-based optimization hardware between the user CPU and a plurality of controllers connnected to individual disk drives. Upon using read and write requests to the various controllers, the optimizing hardware thereafter sequentially queries the controllers to see if they are done yet. If not, the hardware moves onto the next and the next until it finds one that is complete and handles that request. This is better than handling the requests on a first in, first out (FIFO) basis as in the balance of the prior art, but far from optimum. Within the confines of the mode of operation of prior art controllers and storage devices, however, it is probably the best that can be hoped for.

Within the past few years, solely in recognition of the transfer rate bottleneck of serial disk drives (i.e. actually discounting the drawbacks to performance of seek time), some initial work has been done with parallel transfer drives (PTDs). This work, contrary to the findings of the applicant herein, assumes that seek time is irrelevant to the data transfer rate problem. The present state of PTD development is reported in an article entitled "The bottleneck in many applications created by serial channel disk drives is overcome with PTDS, but the price/Mbyte is high and the technology is still being refined" by Michael Gamerl of Fujitsu America, Inc., which appears beginning at page 41 of the February 1987 issue of HARDCOPY magazine. Generally, according to that article, the approach employed with PTDS as developed to date is the employing of multiple read/write heads moved in unison on arms with the data written in parallel to multiple magnetic disks which are mechanically or electronically linked to spin actually or virtually in unison. As with so-called "dumb terminals", which include little or no decision-making capability, prior art PTDs could be classified as "dumb disks" in that the only logic provided generally is in the form of a FIFO buffer with associated logic (i.e., "de-skewing circuitry") employed in the path for the transfer of the data to compensate for slight differences in parts alignment and, therefore, latency of data transfer bit positions in the time domain. While some PTD developers advocate providing "intelligence", it appears that what they consider intelligence is only part of the user interface and actually degrades performance potential. As stated in the article, "To support each PTD arm separately, drive hardware is duplicated for each. Otherwise, the structure of a PTD is similar to high performance serial drives." No mention is made of providing for self-checking and correction of transferred data, or the like. No mention is made of providing for interface independence- either on the user or storage device side. Optimization of seek time is not only not mentioned, but actually discounted.

Finally, the concept of "fault tolerance" and the inability of prior art storage device systems to achieve that goal should be addressed. A recent article on fault tolerant computer systems described a fault tolerant system as "a system in which no single failure will be functionally apparent to the user. In other words, fault tolerance means that a system will continue to process even when a component has failed." There are five characteristics required for fault tolerance - Redundancy, Detection, Isolation, Reconfiguration, and Repair. First, every element of the system must have a backup, so that if a component fails, there is another to assume its responsibilities. Second, a fault must be detectable by the system so that the fault can be identified and then repaired. Third, the failed component must be isolated from the rest of the system so the failure of one component will not adversely affect any other component. Fourth, the system must be able to reconfigure itself to eliminate effects from the failed component and to continue operation despite the failure. Finally, when repaired, the failed component must be brought back into service without causing any interruption in processing. With regard to present storage systems, the concept of fault tolerance simply does not exist. None of the five above-enumerated characteristics are met. As described above, in a typical prior art disk storage system, a CRC error which is not a transient and therefore correctable by a reperformance of the operation results in a very apparent inability of the system to continue.

Wherefore, it is the principal object of the present invention to provide a new approach to controllers and associated storage devices such as disk drives, and the like, which provides the benefits of parallel operation employing a plurality of individual devices operating in an intelligent environment making optimum use of their capabilities through the reduction of seek time, and the like.

It is another object of the present invention to provide high capacity without the need to employ more exotic and high priced storage technologies.

It is yet another object of the present invention to provide fault tolerance, high reliability, and the ability to reconstruct lost data simply and easily.

It is still another object of the present invention to provide a new approach to storage system technology which dramatically reduces, and in some cases eliminates, the necessity for backing up the mass data storage system.

It is yet a further object of the present invention to permit vast increases in the transfer rates for data to and from a storage device beyond the limits normally imposed by speeds of rotation and seek times.

It is another object of the present invention to provide a heretofore non-existent device to be interposed between conventional computer storage device controllers and conventional storage devices which provides interface transparency on both sides and a communications and operation intelligence between the conventional devices.

We acknowledge the disclosure in EP-A-0156724 and US-A-4849929 of a storage device system in the form of a fault-tolerant Winchester type disk system, having the features of the pre-characterising portion of Claim 1 below.

We also acknowledge the disclosure in Computer Technology Review, VI (1986) Summer, No. 3, Los Angeles, California, U.S.A., pages 133-139, W. D. Moren: "Intelligent Controller for Disk Drives Boosts Performance of Micros" of the use of a cache memory situated between a computer bus and a disk drive. The FIFO cache allows operations to overlap in time so that an operation performed by the disk storage device need not be completely executed before the next operation is begun. Furthermore, the disclosure in Conference Record for Electro/87 and Mini/Micro Northeast -87 held on 7^{th} to 9^{th} April 1997, New York, US, pages 1 to 8, B. Moren: Mass storage controllers and Multibus(r) 11, describes a message passing coprocessor and bus interface unit for connecting a disk drive unit or tape unit to a specific type of industry standard system bus, referred to as the Multibus 11. The disk drive or tape unit is connected from a local bus that is in turn connected from the Multibus 11. Data being read from or written to the disk or tape drive unit is buffered in a memory associated with the local bus.

We further acknowledge the disclosure in US-A-4425615 of a cache mechanism connected between one or more host processors and one or more storage control units and storage units, such as disk devices. The cache mechanism includes a cache store for storing data to be read from or written to the storage units and a command queue for storing commands waiting execution by the disk devices. The cache mechanism executes commands received from the host processors in an order determined, first, by the priority of the host processor issuing the command, and second, by the sequence in which the command is received.

The present invention provides a storage device as defined in Claim 1, and a method according to Claim 2 of using such a device. The foregoing objects and other objects can be achieved by the storage device and control system of the present invention which has the ability to: reconstruct lost data through the use of one extra storage device containing error/recovery code bits;
have a single controller concurrently read and write to multiple storage devices;
easily change interfaces with the user and/or the employed storage devices;
simultaneously employ multiple interface conventions with the user and/or the employed storage devices;
quickly and easily adapt to various storage device types including the simultaneous concurrent use of different storage device types;
emulate another storage device for user transparency and convenience; and,
adapt to various size devices.

The invention will be further understood from the following description of preferred embodiments, by way of example only, with reference to the drawings, wherein:
Fig. 1 is a simplified drawing of a prior art disk drive system and its manner of interfacing with a user CPU.
Fig. 2 is a simplified plan view drawing of the disk and head positioning system employed in the prior art disk drive system of Fig. 1.
Fig. 3 is a simplified side view drawing of the disk ahd head positioning system employed in the prior art disk drive system of Fig. 1.
Fig. 4 is a drawing showing the prior art method of parity checking employed in apparatus such as that of Figs. 1-3.
Fig. 5 is a simplified block diagram of an intelligent disk drive system embodying the present invention.

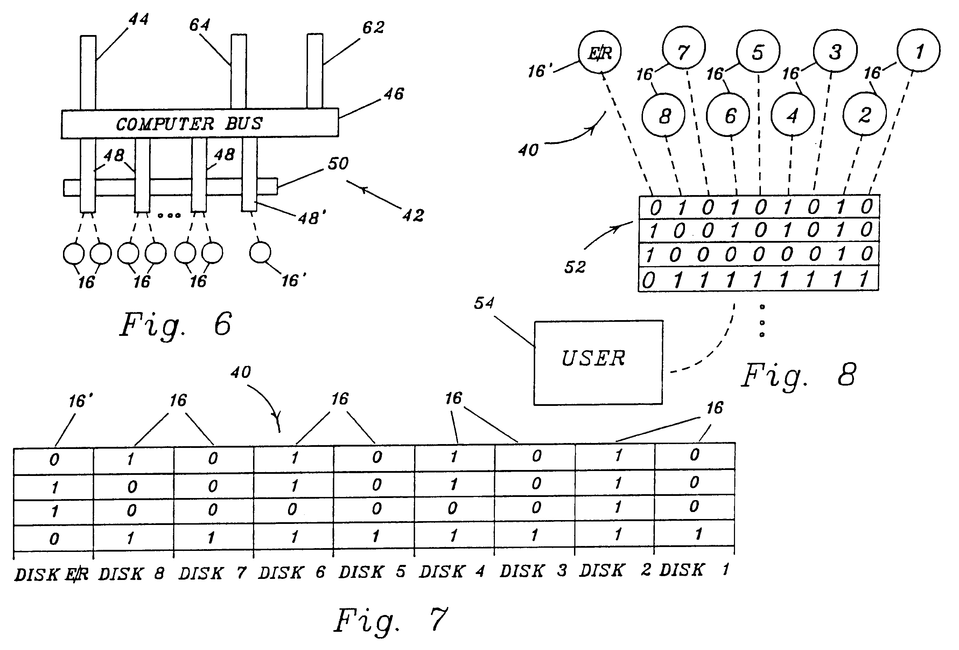

Fig. 6 is a simplified drawing showing the basic structure of the virtual disk controller employed in an embodiment of the present invention.
Fig. 7 is a simplified drawing showing data storage across a plurality of disk drive units according to one embodiment of the present invention and corresponding to the data storage in Fig. 4 for comparison purposes.
Fig. 8 is a simplified drawing showing how the individual disk drives transfer the data of Fig. 7 into a buffer for subsequent access by the user as contiguous bits comprising sequential bytes.

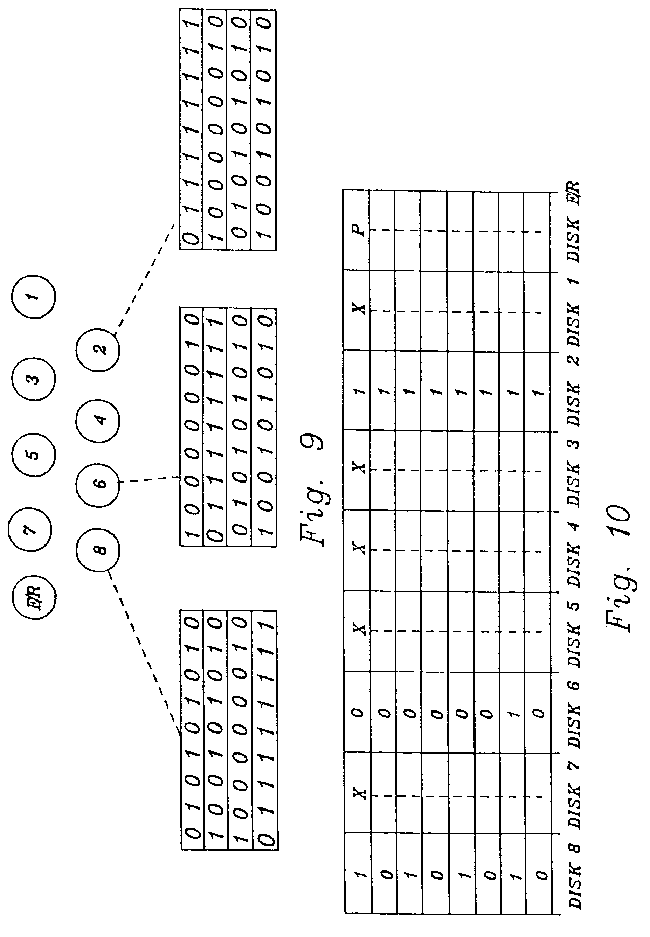

Fig. 9 is a simplified drawing showing how the individual disk drives asynchronously transfer the data of Fig. 10 into separate buffers for subsequent access by the user.
Fig. 10 is a simplified drawing showing data storage across a plurality of disk drive units according to a second embodiment of the present invention and again corresponding to the data stored in Fig. 4 for comparison purposes.

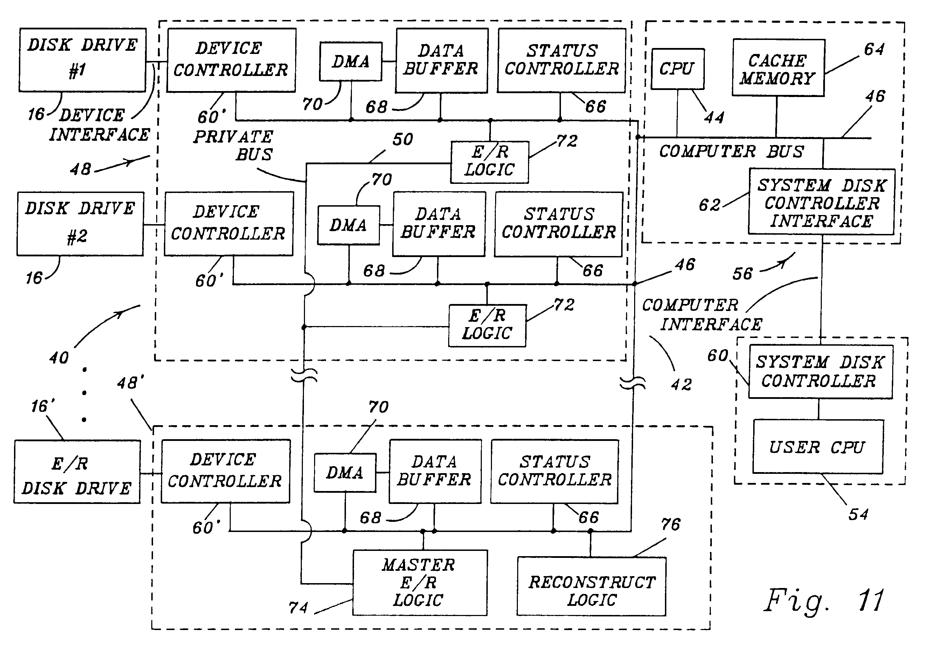

Fig. 11 is a more detailed block diagram of a virtual disk drive system according to the present invention.

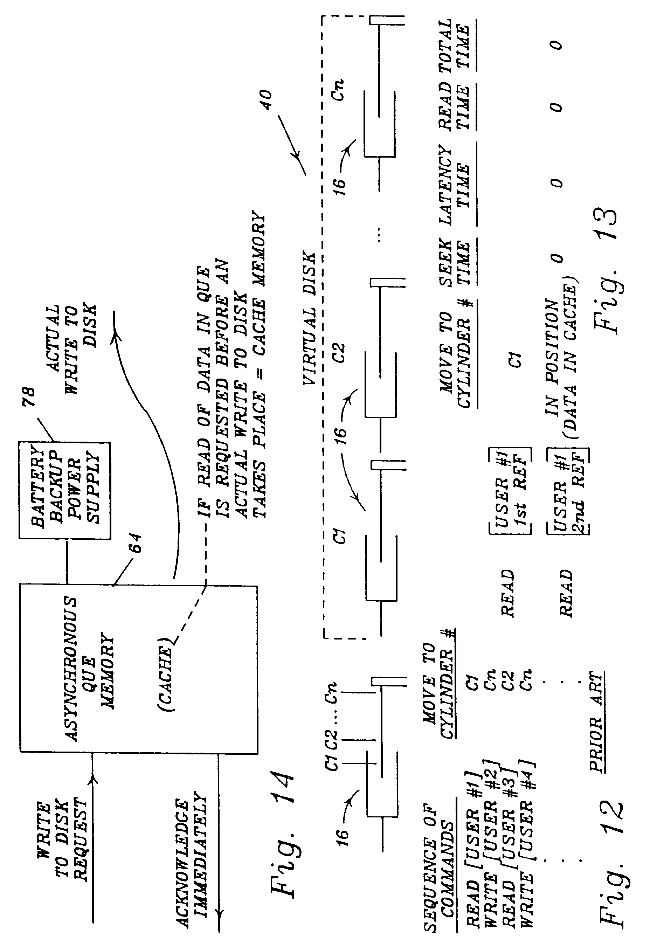

Fig. 12 is a simplified drawing showing the prior art effect of a sequence of commands requiring movement to different cylinders on a single disk.
Fig. 13 is a simplified drawing showing the present invention as employed in an embodiment where the disks comprising the virtual disk are cylinder oriented and the beneficial effect to users realized thereby.
Fig. 14 is a block diagram showing how the battery backed up asynchronous que memory of the present invention through which data is transferred to the actual disk drives acts as a cache memory to improve speed of operation in many applications.

The present invention is based on replacing the single prior art disk drive with a virtual disk drive comprised of a plurality of individual and separate conventional prior art disk drives for the data and one additional disk dedicated to the containing of error recovery code (ERC) bits associated with the data wherein the plurality of disk drives operate concurrently and intelligently in parallel. As will be developed in detail hereinafter, such a hither-to-untried approach provides the basis for all the above-enumerated objects of the present invention. The capacity of the virtual disk is "n" times that of its individual disks, thus achieving the object of increased capacity. Even employing the same rotational speeds within the individual disk drives at their fixed transfer rates, the virtual disk, operating in parallel instead of serially, should be able to achieve transfer rates at least seven or eight times that realizable by the individual, serial, and rotationally limited disk drives. With respect to fault tolerance, reliability, and reconstructability, as will be appreciated from the description hereinafter, the intelligent virtual disk approach of the present invention maximizes reliability and provides reconstructability such that frequent backing-up truly can be eliminated as a redundant non-necessity. Moreover, it meets all five of the required characteristics for basic fault tolerance.

The intelligent virtual disk drive of the present invention is generally indicated as 40 in Fig. 5. To the user CPU 10 of Fig. 1, the virtual disk drive 40 of the present invention is "transparent"; that is, it appears to the CPU 10 as any other disk drive, such as prior art disk drive 20. Connection is a simple matter. The I/O cable 18 is simply unplugged from the prior art disk drive 16 of Fig. 1 and plugged into the virtual disk drive 40 of the present invention. That is all that is required. This is an important consideration since, to be truly useful, any device must be "plug compatible" with existing hardware and software if it is to be commercially acceptable. Thus, with the present invention, the CPU 10 still sends its read/write requests to its associated disk controller 14 for interfacing with "disk drive" 40 over I/O cable 18 in its normal and expected manner. Within the virtual disk drive 40, however, I/O cable 18 actually interfaces with a CPU-based intelligent interface and control portion 43 connected to the virtual disk controller 42, which is the heart of the present invention. Virtual disk controller 42 is, in turn, connected to use a plurality of individual conventional prior art disk drives 16, 16' such as that of Figure 1. The outputs from and inputs to the virtual disk controller 42 to and from the disk drives 16, 16' must be according to whatever format is presently being employed, which they are, as will be described shortly. Since the disk drives 16 are conventional in nature and the interfaces thereto are also conventional, the disk drives 16, 16' could easily be replaced by bubble memories, or the like to achieve the non-rotationally based benefits of the present invention such as increased speed, capacity and error protection and reconstructability in conjunction therewith. Moreover, as will be described shortly, the interface definition is separately replaceable so that reconfiguration for changes in the "conventional" interface on either side can be made by merely changing that interface definition. This internal reconfigurable interface means that new storage devices can be employed at any time with the user interface remaining constant and unchanged. Thus, the "disk drive" being addressed by the user could, in fact, be a bubble memory or some other storage device. The present invention, therefore, embodies a previously non-existent device interposed between the user and the storage device providing transparency in both directions.

Turning briefly to Figure 6, the physical structure of the present invention as built by the applicant herein for maximum flexibility and reconfigurability is shown in simplified form. In tested embodiments, the CPU 44 employed to provide the "intelligence" which distinguishes the present invention over the prior art is connected to computer BUS 46. A plurality of cards 48 plugged in the computer BUS 46 contain the logic for interfacing with the CPU 44 and the disk drives 16. Card 48′ controls and detects failure of error/recovery disk 16′. These together contain logic and data to correct any failure from drives 16, 16′. The system disk control interface is contained on a separate card 62 so that if conventions relative to the devices employed change, the virtual disk control and interface can be quickly and easily adapted to the new convention. The cards 48, 48′ are also separately interconnected by a private BUS 50 so as to be independent of the computer BUS 46.

According to the present invention, data (where the term "data" includes computer programs which, too, are nothing more than binary numbers to the disk drive) can be allocated to the parallel disk drives 16, 16′ comprising the virtual disk drive 40 in several ways. As with most aspects of computer technology, there are tradeoffs in the present invention which occur relative to time, space and cost. Each manner of allocation is a separate embodiment of the present invention and provides certain advantages and disadvantages in this regard with respect to the other. Certain applications will best be served by one embodiment while others will operate best with another. Thus, the choice is which will best serve the end application. Several typical embodiments possible and the characteristics of each will now be described. Those skilled in the art will recognize that other possible configurations for the data beyond those to be described are possible within the scope and spirit of the present invention and, therefore, the specific examples to be described as not intended to be limiting in their effect.

In an actual prior art disk, it is typical that each of the cylinders is divided into a plurality of tracks of a fixed number of sectors. Consider the following data on two commercial disks of 75 and 300 Mbyte capacity designations, respectively:

| | | |
|---|---|---|
| Tracks per cylinder | 5 | 19 |
| Cylinders | 823 | 823 |
| Sector size | 512 | 512 |
| Sectors per track | 36 | 36 |
| Total storage (Mbytes) | 75.85 | 288.22 |
| Seek average (msec) | 30 | 30 |
| Seek max | 55 | 55 |
| Seek min | 6 | 6 |
| Full rotation time (msec) | 16.66 | 16.66 |
| Data transfer rate | 1.2M | 1.2M |

As can be seen, the two disks are virtually identical except for the number of tracks per cylinder. This, however, has important ramifications relative to performance. While it would appear that both disks should operate the same with the only difference being in the total capacity of the larger disk, in actuality, the larger disk performs better than the smaller. The reason is simple: to change cylinders, there must be movement of the arms and read/write heads as previously described. That takes lost time and lost time reduces performance. In the smaller disk, 45 consecutive sectors (5 tracks x 9 sectors/track) can be accessed without access-arm movement. By contrast, in the larger disk it is 171 consecutive sectors. Thus, consecutive sectors addressible without access-arm movement (i.e. associated seek time) is a significant measure of performance.

The first embodiment of the present invention relative to data storage is depicted in Figures 7 and 8. According to this approach, the eight individual bits comprising each byte are spread across eight individual disks. For ease of comparison and understanding, the data depicted in Figures 7 and 8 corresponds to the data used for the example of Figure 4. As shown in Figure 7, for example, there are nine disks for the eight data bits and a single error/recovery bit. As with the example of Figure 4, the data of Figures 7 and 8 is written and read from the top down as the figures are viewed. Thus, it can be seen that the error/recovery bit (in this case equal to the parity bit for the same data) and data of the first byte (010101010) in Figure 4 is the same in this embodiment of the present invention, only spread out across a particular identifiable bit position in the nine disk drives 16, 16' of the virtual disk drive 40 as 0-1-0-1-0-1-0-1-0. As represented by the drawing of Figure 8, in this embodiment, the data from each of the disk drives 16, 16' is asynchronously written into and read out of a buffer 52 as individual bit streams into and out of the bit positions of the sequential bytes. The user 54 interfaces with the buffer 52 and is completely unaware of the asynchronous nature of the data transfer which takes place with respect to the buffer 52 and the disk drives 16, 16' comprising the virtual disk drive 40. In this embodiment maximum speed is sacrificed for simplicity of control logic and lower cost. This embodiment also provides the ability to reconstruct erroneous data "on-the-fly"; that is, while data is being transferred, lost or added bit within a byte can be found and corrected. Not only that, such dynamic failure reconstruction can be continuous in nature from byte to consecutive byte. What that means is that one disk drive 16, 16′ can completely fail (or be removed for maintenance) and the virtual disk drive system of the present invention will continue in operation uninterrupted with virtually no loss of performance. Once the removed disk drive 16 is re-established in the system, the data contained on it will be automaticaly restored dynamically during use according to the same process. The way this works employing prior art disk drives which could not individually accomplish the same thing can be understood by comparing Figures 3 and 4 to Figure 5. In prior art disk drive 16 containing the data of Figure 4, if the first byte (010101010) drops a bit and now contains, for example, 010101000, the three "1" bits is odd in number and a parity error within the first byte will cause a CRC error in the sector integrity. The logic, however, does not know which bit position is involved and cannot take corrective action. Consider the same failure in the virtual disk drive 40 as depicted in Figure 7. The data within "Disk 2" representing the bit stream of bit 2 is still maintained in eight bit bytes with an associated parity bit since it is a "standard" prior art disk drive. Thus, the reconstruction logic of the present invention is informed of two facts. First, that Disk 2 had a CRC error in reading the sector which contained the bit 2 bit for the first byte, i.e. that it is the Disk 2 bit position (i.e. bit 2) which is in error. Second, that the error/recovery bit test across the first byte (010101010) is in error (since 010101000) was read). Since bit 2 of the first byte is reading as a "0" and is in error, in a binary system it can only correctly be a "1". By making that correction, the erroneous first byte is dynamically corrected from 010101000 to 010101010. In actual practice, this is accomplished by simply logically XORing the contents of the bit position and its corresponding error/recovery bit together in a manner well known in the art. Note that if it is the error/recovery bit drive, i.e. Disk E/R, which fails, the correction takes place in the same manner.

The second embodiment of the present invention to be described is based on the principle of performance maximization, i.e. reduction of seek time, etc. What is sacrificed is simplicity of control logic. The trade-off is not hard to justify, however. Complexity of the logic within the virtual disk controller 42 of the present invention is a small consideration which is of no importance to the end user whatsoever and of manageable impact on the overall cost of producing a commercial system. On the other hand, day to day performance is a continuous thing of direct relevance to the end user.

The second embodiment and its manner of operation is shown in Figures 9 and 10. As shown in Figure 10, the data in this embodiment is distributed on the disks on a designated sector per disk drive basis. For purposes of example, the first byte of the contents of the three sectors 2, 6 and 8 are shown in Figure 10 as being contained on Disks 2, 6 and 8. To avoid confusion, the data contents of the remaining disks is undesignated. As the figure is viewed, the first byte of sector 2 is 11111111, the first byte of sector 6 is 00000010, and the first byte of sector 8 is 10101010. As shown in Figure 9, the advantage of this embodiment is that the nine disk drives 16, 16' corresponding to sectors 1-8 plus error/recovery across the drives 16, 16' can transfer data into and out of separate buffers 52 asynchronously and simultaneously.

As can be appreciated, the contents and manipulation of the error/recovery disk (disk E/R) 16' is somewhat more complex in this embodiment, particularly when an error is discovered. Error/recovery across the disk drives 16, 16' comprising the virtual disk drive 40 in this embodiment is on a sector by sector basis. The only time that the error/recovery disk 16' may need to be updated is when a write to one of the disks takes place. To this end, as will be described in greater detail shortly, the logic of the present invention accomplishing the transfer of data to an individual disk drive 16 checks the status of the bits looking for bits that have changed (i.e. from "1" to "0" and vice versa). Only when a bit position has changed does the corresponding bit on the error/recovery disk 16' have to be changed. That change is made as a separate write to the error/recovery disk 16' which occurs before any other changes to the data disks 16 can take place which would affect the error/recovery disk 16' in that area.

To reconstruct lost data in this embodiment, of course, the data for the sectors and the corresponding error/recovery data from Disk E/R which include the "lost" data must be brought into a common buffer area so that the across-the-drives error/recovery correction procedure described above with respect to the previous embodiment can be accomplished. Obviously, this is a more complex and time consuming procedure; but, statistically, it will occur very rarely. In the event of a complete disk drive removal or failure, in this embodiment there would be a significant reduction in performance while continual reconstruction and correction in the above-described manner was taking place; however, as with the previous embodiment, there would be no actual "crash" of the virtual disk drive 40 and computation would continue, albeit in a somewhat degraded performance mode - which is certainly better than in the prior art where a crash results in no performance whatsoever.

A third possible embodiment for the assignment and storage of data is shown in simplified form with reference to Figures 12 and 13. In this case, it is assumed that the application is heavily cylinder oriented. To maximize performance and reduce seek time, the disks 16 comprising the virtual disk 40 are assigned and the data allocated on a "cylinder" basis. To see the effect of this data and address structuring within the overall environment of the present invention, reference should first be made to Figure 12 wherein a prior art single disk is shown along with the effect of a simple typical sequence of commands by a plurality of users. As can be seen, the various cylinders (i.e. C1, C2 ... Cn) are located radially on the disk 16. For simplicity, only one disk and head assembly is shown for each of the disks 16 whereas it is understood that, in actuality, the disks 16 in Figures 12 and 13 contain multiple disks as in Figure 3. As each user does a read or write to his various cylinder (remembering that the users are cylinder oriented), the heads must move in and out to be positioned vertically at the desired cylinder. Accordingly, each user must wait until the preceding command has been accomplished, i.e. first in, first out. In the embodiment of the present invention of Figure 13, each disk 16 is identified with an individual cylinder. Thus, the users are able to concurrently access their individual "cylinders". Moreover, as depicted in the figure, a user making sequential read requests to data previously read has no seek time whatsoever with the present invention since the data previously read will be retained in cache memory and, therefore, be instantly available without rereading from disk in a manner to be described in more detail shortly. This is an important distinction of the present invention over the prior art. As will be remembered from the discussion of round robin "optimization" discussed previously, sequentially doing a query of the status of several disk drives is the best that the prior art can accomplish given its "dumb" drive status. Such is not the case with the intelligent storage system of the present invention. The logic knows where each disk 16, 16′ has the heads thereof positioned as a result of the last read or write request thereto. They are dynamically changing values maintained by the logic of the CPU for this very purpose. Thus, in the present invention, seek time can be minimized because the logic can keep the drives 16, 16′ working in an optimal manner as, for example, by giving priority to requests that require the minimum movement of each drive.

Having now described several embodiments of the present invention as they relate to the manner and mode of data storage across a plurality of conventional disk drives comprising a virtual disk drive, the construction of the virtual disk drive controller of the present invention and its preferred manner of operation to achieve additional benefits over and above those enumerated above will now be addressed.

Turning first to Figure 11, the virtual disk drive controller 42 of the present invention as configured to accomplish the second embodiment as described above (i.e. sector-assigned disks) is seen as comprising an interface and control portion 56 connected via the computer BUS 46 to a plurality of disk drive interfacing portions 48. The dotted line in the figure stands for the proposition that in the tested embodiment of the applicant, two interfacing portions 48 are contained on a single card. The standard interface presently employed by disk drives and disk drive controllers is the so-called "SCSI" interface. As can be seen, to be compatible with the user 54 and its system disk controller 60 on the one hand and the standard disk drives 16 employed in the virtual disk drive 40 on the other hand, the interface and control portion 43 includes a system disk controller interface 62 which presents the proper interface to the system disk controller 60 while the disk drive interfacing portions each terminate in a device controller 60' which presents the proper device interface to the disk drives 16 connected thereto. The type of interface employed is not considered to be a feature of the present invention. The ability to employ any type of interface and the ability to easily reconfigure to a new interface, however, are considered as important features and points of novelty of the present invention over the prior art. Control of the virtual disk drive controller 42 is accomplished by the programming logic contained within the CPU 44. It is preferred that the programming logic performed by the CPU be in the form of firmware residing in read only memory (ROM) but other methods of accomplishment could be employed if desired. The interface and control portion 56 also includes what is, because of special use made thereof to be described shortly, designated as "cache memory" 64.

Each of the disk drive interfacing portions 48 have a status controller 66 connected to the computer BUS 46. The device controller 60' previously mentioned is connected between its associated disk drive 16 and the computer BUS 46. Also connected to the computer BUS 46, in each case, is a data buffer 68 controlled by a DMA 70. These elements operate in a manner well known in the art and, therefore, no additional description thereof will be provided in the interest of simplicity. There is also error/recovery logic 72 associated with each disk drive interfacing portion 48. It is this logic which, as previously mentioned, checks the bits of data being written to the disk for changes by XORing it with the prior data. When changes are found, this information is forwarded to the master error/recovery logic 74.

Error/recovery bit generation across the individual disk drive interfacing portions 48 according to the algorithm being employed is contained in the master error/recovery logic 74 which interfaces back to each of the error/recovery logic blocks 72 through a private BUS 50 as well as to the controller 60′ and associated components for the error/recovery drive 16′ to cause update thereof when necessary due to a change in the contents of a bit position requiring changing of the corresponding error/recovery bit on the error/recovery drive 16′. Reconstruct logic 76 is connected to the computer BUS 46 and, therefore, can communicate with the master error/recovery logic 74 as well as with all the other error/recovery logic blocks 72 and the other system component. As will be appreciated by those skilled in the art without necessity for a further detailed description, the reconstruct logic 76 has access to all the information necessary to accomplish reconfiguration of lost data. As mentioned earlier, this is accomplished in the manner suited to the embodiment for data storage being implemented. For example, in the case of sector data orientation across the disk drives 16, 16′, in the event of lost data being detected, the reconstruct logic would have to read the sectors including the lost data from the various drives 16, 16', sense the drive error signal from the status controllers 66 appearing on the computer BUS 46 to determine which drive 16, 16' contains the data in error, and then XOR the data from the bad drive with the error/recovery bits to assure proper reconstruction of lost data, and then present the reconstructed data to the CPU 44 for use. Note that, as mentioned before, provision is made for recognizing and correcting the error/recovery drive 16' if it is bad, just as with any of the other drives 16. It will be appreciated that simultaneous multiple error detection and correction can be accommodated with additional error correction drives.

Turning now to Figure 14, a final, yet major, aspect of the present invention will now be discussed. The actual writing into and reading from the individual disk drives 16, 16' is via the individual data buffers 68. Cache memory 64 is a large (i.e. 3.6 Mbytes in a tested embodiment) memory used for the storage of data going to and coming from the user CPU 54. It is into the memory 64 that asynchronously read sector data is moved when the virtual disk drive 40 is operating in the manner as described with respect to Figures 9 and 10. In this regard memory 64 is an asynchronous queue for the movement of data to and from the disk drives 16. To maximize the performance increases possible with the present invention, when the user CPU 54 presents a block of data to be written to "disk" (i.e. the virtual disk drive 40 which is transparent to him), the data is moved into an available area of the memory 64 and an immediate acknowledgement made to the user CPU 54. Thus, the user CPU believes that the requested disk write has been accomplished. The actual write to the appropriate disk drive 16 for the sector involved takes place whenever possible thereafter. The logic of the CPU 44 in the interface and control portion 56 asynchronously writes from the memory 64 into the appropriate data buffer 68 when it is next available for a write to disk. In this regard, the logic maximizes the transfers out of the memory 64 without regard to traditional FIFO or LIFO procedures. Rather, it attempts to keep disk transfers maximized by writing out the best data for minimizing seek times and employing disk drives which would otherwise be idle.

In many data base operations, for example, it is quite common to write to disk and need the almost immediate re-access to the same data. In such cases, the present invention operates memory 64 as a cache memory as depicted in Figure 14; that is, if a read request is made for data already queued within memory 64 to be written to disk, the actual read request is aborted and the data is presented back to the requestor as having just been read from disk in response to the request. As should be readily apparent to those skilled in the art, without more, the use of the large asynchronous queuing memory 64 would be at odds with the reliability aspects of the present invention. Thus, one cost factor which must be absorbed to fully realize the benefits of the present invention is the use of a battery backup power supply 78 in conjunction with the memory 64 such that in the event of a power failure, the data contained therein will not be lost. Cache memory in and of itself is not new. However, cache memory configured as in the present invention and operating in the manner as described herein is believed to be novel over the prior art.

Having thus now described several possible data orientations possible with the present invention and the physical structure thereof, the overall manner of operation thereof to maximize performance through the use of intelligence in work allocation will now be addressed with particularity. This is important to a complete understanding and appreciation of the difference between prior art disk drives (including the PTD variety) and the highly intelligent, parallel, virtual disk drive system of the present invention. In this regard, in addition to the fact that a plurality of individual disk drives are employed and the fact that detection and reconfiguration of lost data is possible, the most important factor of the present invention is the incorporation of a microcomputer to intelligently and efficiently optimize all the mechanical movements of the individual drives. As can be appreciated, this is a two edged sword; that is, there must be the individual disk drives with their separately positionable mechanical mechanism and there must be intelligence in the manner in which the drives are positioned. In the present invention, the CPU 44 is able to concurrently allocate the read/write operations to the various disk 16, 16′ in the most optimum manner, looking for operations that maximize efficiency. For example, in a conventional disk drive, operations are performed sequentially. By contrast, in the present invention, the intelligence of the logic contained within the CPU 44 is designed to concurrently and asynchronously employ the various drives 16, 16′ (and the cache memory 64) to maximize efficiency. For example, if drive "n" is at cylinder 13 and there is a request queued for the same drive at a nearby cylinder, the CPU 44 can be programmed to perform that request prior to one requiring that the arm and head assembly move to a more removed position. Again, the various possibilities for the "intelligence" of the CPU 44 made possible by the unique structure of the virtual disk drive of the present invention providing for true concurrent operation are largely a function of the application to which it is applied. In some applications, for example, sequential operation might be a necessity and the above-described example of taking requests out of turn to take advantage of cylinder positioning might not be desirable.

## Claims

1. A storage device system for computers capable of dynamically and transparently reconstructing lost data, comprising:
(a) a plurality of first individual storage devices (16) for storing digital information;
(b) a second individual storage device (16') for storing error/recovery code bits;
(c) means for generating and storing error/recovery code bits in said second individual storage device (16') according to a pre-defined error/recovery code checking algorithm for said digital information at corresponding respective bit positions across said plurality of first individual storage devices (16); and
(d) means for using said error/recovery code bits in combination with the contents of said corresponding respective bit positions across said plurality of first individual storage devices (16) to reconstruct a changed bit in error in said digital information according to said error/recovery code checking algorithm when one of said first and second individual storage devices (16, 16') detects an error during the transfer of said digital information;
(e) interface means (46,56) disposed for receiving read and write requests from a user CPU (10); and
(f) a plurality of storage device controller means (60') connected between said interface means and respective ones of said plurality of storage devices (16) for interfacing with said plurality of storage devices (16) and operating them concurrently;
characterised in that said interface means (56) comprises a buffer memory (64) for storing data of write requests from said user CPU (10) and writing said data from said buffer memory (64) to said device controller means (60') and said storage devices (16) asynchronously in time and sequence with respect to said write requests, said CPU means (44) and said buffer memory (64) being designed to concurrently and asynchronously allocate read/write operations to the various individual storage devices (16) looking for operations that maximise efficiency; and said interface means (46, 56) comprising CPU means (44), said CPU means (44) including a logic (48) for checking data in said buffer memory (64) and indicating said data as having been read from one of said individual storage devices (16) or as having already been queued to be written to one of said individual storage devices (16), said data being read from said buffer memory (64) without an actual read from said individual storage device when a read request therefor is received from said user CPU (10), whereby said buffer memory (64) acts as a cache memory in such cases; said CPU means (44) including logic for immediately acknowledging a write to one of said individual storage devices (16) upon the data to be written being placed in said buffer (64), the user CPU (10) believing the disk write operation to have been accomplished.

2. A method of storing digital information in a mass storage device system for computers with the capability of dynamically and transparently reconstructing lost data and having:
(a) a plurality of first individual storage devices (16) for storing the digital information; and
(b) a second individual storage device (16') for storing error/recovery code bits; comprising:
(c) during the writing of the digital information to the first individual storage devices (16), generating and storing error/recovery code bits in the second individual storage device (16') according to a pre-defined error/recovery code checking algorithm for the digital information at corresponding respective bit positions across the plurality of first individual storage devices (16);
(d) using the error/recovery code bits in combination with the contents of the corresponding respective bit positions across the plurality of first individual storage devices (16) to reconstruct a changed bit in error in the digital information according to the error/recovery code checking algorithm when one of the first and second individual storage devices (16,16') detects an error during the transfer of the digital information;
(e) an interface means (46,56) to receive read and write requests from a user CPU (10,54); and
(f) a plurality of storage device controllers (60') connected between the interface and respective ones of the plurality of storage devices (16) to interface with the plurality of storage devices (16);
the method comprising operating those storage devices (16) concurrently,
and characterised by the use of a buffer memory (64) in said interface means (56) for storing data of write requests from said user CPU (10) and for writing said data from said buffer memory (64) to said device controller means (60') and said storage devices (16) asynchronously in time and sequence with respect to said write requests, said CPU means (44) and said buffer memory (64) being designed to concurrently and asynchronously allocate read/write operations to the various individual storage devices (16) looking for operations that maximise efficiency; and use of a CPU means (44) as pad of said interface means (46, 56), said CPU means including a logic (48) for checking data in said buffer memory (64) and indicating said data as having been read from one of said individual storage devices (16) or as having already been queued to be written to one of said individual storage devices (16), said data being read from said buffer memory (64) without an actual read from said individual storage device when a read request therefor is received from said user CPU (10), whereby said buffer memory (64) acts as a cache memory in such cases; said CPU means (44) including logic for immediately acknowledging a write to one of said individual storage devices (16) upon the data to be written being placed in said buffer (64), the user CPU (10) believing the disk write operation to have been accomplished.

3. A storage device system according to Claim 1, in which
the mass storage devices (16) are asynchronously operable and are adapted to interface with respective device controllers (60') at input interfaces thereof, the device controllers (60') including controller interface means for presenting a system device controller interface to said input interface of each said mass storage device (16); and comprising data buffer means (68) for transferring data to and from said mass storage device (16).

4. A storage device system according to Claim 1 or claim 3, said interface means comprising a single interfacing logic portion for interfacing with a user CPU (10,54), said interfacing logic portion including system device controller interface means (43,62) for interfacing with a standard system device controller (14,60) through which the user CPU (10,54) is connected to the storage device system (40); each of said storage device controller means (60') including controller interface means for presenting a standard system device controller interface to said input interface of its respective storage device (16), and a data buffer (68) for transferring data to and from its respective storage device (16);
said interfacing logic portion including a control portion having CPU means (44) operably connected to said plurality of storage device controller means (60') for controlling a concurrent sequence of operation of said storage device controller means (60') in writing data to and reading data from said storage devices (16); and a reconstruct means (76) including means for sensing an error condition from one of said mass storage devices (16,16') in the transfer of data and for using the knowledge of which of said storage devices' data is in error as an indication of which bit position is in error in combination with the said error/recovery bit associated with the data in error containing the erroneous bit to logically reconstruct said erroneous bit.

5. A storage device system according to Claim 1, Claim 3 or Claim 4, in which the error/recovery code checking algorithm is a pre-defined parity checking algorithm, and
said interface means (14,18,46,56,62) includes interface definition means for accepting requests from a user CPU (10,54) according to a first interface convention and for translating said requests into a second interface convention used by said storage device controller means (60') for interfacing with said plurality of storage devices (16).

6. A storage device system according to any of Claims 1, 3, 4 or 5, in which:
(a) said interface means (14,18,46,56,62) includes a control portion (43) having CPU means (44) operably connected to said plurality of storage device controller means (60') for controlling the sequence of operation of said storage device controller means (60') in writing data to and reading data from said storage devices (16);
(b) a plurality of data buffers (68) are connected to respective ones of said plurality of storage devices (16) from which data is written and into which data is read with respect to the associated said storage device .

7. A storage device system according to any of Claims 1, 3, 4, 5 or 6, comprising battery backup power supply means (78) operably connected to said buffer memory (64) for maintaining the data therein in the event of a power failure to the storage device system.

8. A method according to Claim 2 of storing digital information in a mass storage system, comprising:
accepting requests from a user CPU (10,54) according to a first interface convention and translating the requests into a second interface convention used by the storage device controllers (60') for interfacing with the plurality of storage devices (16); and, if desired,
providing a control portion (43) as part of the interface including said CPU (44) operably connected to the plurality of storage device controllers (60') to control the sequence of operation of the storage device controllers (60') in writing data to and reading data from the storage devices (16); and, if further desired,
connecting a plurality of data buffers (68) to respective ones of the plurality of storage devices (16) from which data is written and into which data is read with respect to the associated storage device (16) .

9. A method according to Claim 8, of concurrent operation of multiple storage devices for computers from a single user device controller, in which the interface definition logic within the interface accepts requests from the user device controller according to the first interface convention and translates the requests into the second interface convention used by the storage device controllers (60').

10. A method according to Claim 2, in which the storage device system comprises:
a control portion within the interface means having said CPU (44) operably connected to the plurality of storage device controllers (60') to control the sequence of operation of the storage device controllers (60') in writing data to and reading data from the storage devices (16); and if further desired, and
a plurality of data buffers (68) connected to respective ones of the plurality of storage devices (16) from which data is written and into which data is read with respect to the associated storage device (16) .

11. A storage device system according to Claim 1, the interface means comprising a single interfacing logic portion for interfacing with a user CPU (10,54), said interfacing logic portion including system device controller interface means for interfacing with a device controller (60') through which the user CPU (10,54) is connected to the mass storage device (40);
the storage devices (16) being asynchronously operable and adapted to interface with a said device controller (60') at an input interface thereof;
the storage device controller means (60') being for connecting between said interfacing logic portion and said plurality of storage devices (16), said device controller means (60') including controller interface means (62) for presenting a system device controller interface to said input interface of said mass storage devices (16); and comprising:
data buffer means (68) for transferring data to and from said mass storage devices;
said interfacing logic portion including a control portion having CPU means (44) operably connected to said plurality of device controllers (60') for controlling the sequence of operation of said device controllers (60') in writing data to and reading data from said mass storage devices (16).

12. A storage device system according to Claim 11, in which:
(a) said data buffer means (68) comprises a plurality of data buffers (68) connected to respective ones of said plurality of storage devices (16) from which data is written and into which data is read with respect to the associated said storage device (16); and/or:
(b) said interface means includes interface definition means for accepting requests from a user CPU (10,54) according to a first interface convention and for translating said requests into a second interface convention used by said storage device controller means (60') for interfacing with said plurality of storage devices (16); and/or:
(c) said plurality of device controllers (60'), said controller interface means (62), said data buffers (68), and said interfacing logic portion are interconnected to communicate with one another over a first computer BUS (46), and said error/recovery generator bit means (72,74) and said reconstruct logic means (76) are interconnected to communicate with one another over a second computer BUS (50).

13. A storage device system according to Claim 1, comprising:
a single interfacing logic portion for interfacing with a user CPU (10,54), said interfacing logic portion including system device controller interface means (62) for interfacing with a standard system device controller (60) through which the user CPU (10,54) is connected to the virtual mass storage device (40);
each of the storage device controllers (60'), including controller interface means for presenting a standard system device controller interface to said input interface of its respective mass storage device (16), and a data buffer (68) for transferring data to and from its respective mass storage device (16);
said interfacing logic portion including a control portion having CPU means (44) operably connected to said plurality of device controllers (60') for controlling a concurrent sequence of operation of said device controllers (60') in writing data to and reading data from said mass storage devices (16);
said reconstruct logic means (76) including means for sensing an error condition from one of said mass storage devices (16) in the transfer of data and for using the knowledge of which of said mass storage devices' data is in error as an indication of which bit position is in error in combination with the said error/recovery bit associated with the data in error containing the erroneous bit to logically reconstruct said erroneous bit.

14. A storage device system according to Claim 1, which is a high-capacity, error-correcting virtual disk drive storage device for a computer, the interface means comprising
a single interfacing logic portion for interfacing with a user CPU (10,54), the interfacing logic portion including disk drive controller interface means for interfacing with a standard disk drive controller through which the user CPU is connected to the virtual disk drive storage device;
the storage devices being a plurality of standard disk drives adapted to interface with a standard disk drive controller at an input interface thereof,
the plurality of storage device controller means (60') being disk drive controllers each of the disk drive controllers including controller interface means for presenting a standard system disk drive controller interface to the input interface of its respective disk drive, a data buffer (68) for transferring data to and from its respective disk drive, and parity generator means for generating a parity bit for standard length groups of bits being transferred to its respective disk drive;
the generating and storing means comprising virtual disk drive parity generation means for generating parity bits associated as part of data groupings of bits being transferred to the disk drives; and
the reconstruct means being reconstruct logic means for sensing a parity error condition from one of the disk drives in combination with a parity error in one of the data groupings of bits as indicated by a parity bit generated by the virtual disk drive parity generation means and for using the knowledge of which of the disk drives' data is in error in combination with the parity bit generated by the virtual disk drive parity generation means to logically reconstruct an erroneous bit creating the joint parity error condition,
wherein:
the data buffers in combination comprise FIFO buffer means for holding a plurality of sequential data groupings; and,
the disk drive controllers each include data transfer logic for transferring respective ones of a sequence of the data groupings from their respective disk drives into said FIFO data buffer means asynchronously and for informing the standard disk drive controller through which the user CPU is connected to the virtual disk drive storage device that a requested read operation is complete only when there are sufficient ones of the sequence of the data groupings being read from all the disk drives to assure that the user CPU cannot remove the sequence of the data groupings being read from all the disk drives from said FIFO data buffer means faster than remaining ones of the sequence of the data groupings being read from all the disk drives are read asynchronously into said FIFO data buffer means.

15. A storage device system according to Claim 14, wherein:
the interface logic portion includes a control portion having said CPU means (44) operably connected to the plurality of disk drive controllers for controlling the sequence of operation of the disk drive controllers in writing data to and reading data from the disk drives; and additionally
said CPU means includes said logic for immediately acknowledging a write to the associated disk drive upon data to be written being placed in said buffer memory (64) whereby read throughput of the virtual disk drive storage device is increased.

16. A storage device system according to Claim 13, wherein:
(a) the plurality of disk drive controllers and the interfacing logic portion are interconnected to communicate with one another over a first computer BUS; and,
(b) the controller interface means, the data buffers, and parity generator means of the disk drive controllers are interconnected to communicate with one another over a second computer BUS.

17. A storage device system according to Claim 14, the interfacing logic portion including a control portion having said CPU means operably connected to the plurality of disk drive controllers for controlling the sequence of operation of the disk drive controllers in writing data to and reading data from the disk drives;
and wherein said CPU means includes said logic for immediately acknowledging a write to the associated disk drive upon data to be written being placed in said buffer memory whereby read throughput of the virtual disk drive storage device is increased.

18. A storage device system according to Claim 17, wherein:
the plurality of disk drive controllers and the interfacing logic portion are interconnected to communicate with one another over a first computer BUS; and,
the controller interface means, the data buffers, and parity generator means of the disk drive controllers are interconnected to communicate with one another over a second computer BUS.

19. A storage device system according to Claim 17, in which said CPU means comprises said logic for checking data in said buffer memory (64) and indicating it as having been read from an associated disk drive without an actual read thereof when a read request therefor is received from a user whereby read throughput of the virtual disk drive storage device is increased.

20. A storage device system according to Claim 19, wherein:
the plurality of disk drive controllers and the interfacing logic portion are interconnected to communicate with one another over a first computer BUS; and
the controller interface means, the data buffers, and parity generator means of the disk drive controllers are interconnected to communicate with one another over a second computer BUS.

## Patentansprüche

1. Speichervorrichtungssystem für Computer, das in der Lage ist, verlorene Daten dynamisch und transparent wiederherzustellen, mit:
(a) einer Vielzahl von ersten einzelnen Speichervorrichtungen (16) zum Speichern von digitaler Information;
(b) einer zweiten einzelnen Speichervorrichtung (16') zum Speichern von Fehler/Rückgewinnungscodebits;
(c) einer Einrichtung zur Erzeugung und Speicherung von Fehler/Rückgewinnungscodebits in der zweiten einzelnen Speichervorrichtung (16') nach einem vorher definierten Fehler/Rückgewinnungscodeprüfalgorithmus für die digitale Information an entsprechenden jeweiligen Bitpositionen quer durch die Vielzahl von ersten einzelnen Speichervorrichtungen (16); und
(d) einer Einrichtung zur Verwendung der Fehler/Rückgewinnungscodebits in Kombination mit dem Inhalt der entsprechenden jeweiligen Bitpositionen quer durch die Vielzahl von ersten einzelnen Speichervorrichtungen (16), um ein irrtümlich geändertes Bit in der digitalen Information nach dem Fehler/Rückgewinnungscodeprüfalgorithmus wiederherzustellen, wenn entweder die erste oder zweite einzelne Speichervorrichtung (16, 16') während der Übertragung der digitalen Information einen Fehler ermittelt;
(e) eine Schnittstelleneinrichtung (46, 56), die zum Empfangen von Lese- und Schreibanforderungen von einer Anwender-CPU (10) eingerichtet ist; und
(f) einer Vielzahl von Speichervorrichtungscontrollereinrichtungen (60'), die zwischen die Schnittstelleneinrichtung und entsprechende aus der Vielzahl von Speichervorrichtungen (16) geschaltet sind, zum Kommunizieren mit der Vielzahl von Speichervorrichtungen (16) und zum gleichzeitigen Betreiben derselben;
dadurch gekennzeichnet, daß die Schnittstelleneinrichtung (56) einen Pufferspeicher (64) zum Speichern von Schreibanforderungsdaten von der Anwender-CPU (10) und zum Schreiben der Daten aus dem Pufferspeicher (64) in die Vorrichtungscontrollereinrichtung (60') und die Speichervorrichtungen (16) asynchron in Zeit und Ablauf in bezug auf die Schreibanforderungen umfaßt, wobei die CPU-Einrichtung (44) und der Pufferspeicher (64) geeignet sind, Lese/Schreiboperationen gleichzeitig und asynchron verschiedenen einzelnen Speichervorrichtungen (16) zuzuweisen, die Operationen erwarten, die die Effizienz maximieren; und wobei die Schnittstelleneinrichtung (46, 56) eine CPU-Einrichtung (44) umfaßt, wobei die CPU-Einrichtung (44) aufweist: eine Logik (48) zum Prüfen von Daten in dem Pufferspeicher (64) und zum Anzeigen dieser Daten als solche, die aus der einen der einzelnen Speichervorrichtungen (16) gelesen worden sind, oder als solche, die bereits in die Warteschlange eingeordnet worden sind, um in eine der einzelnen Speichervorrichtungen (16) geschrieben zu werden, wobei die Daten aus dem Pufferspeicher (64) gelesen werden ohne tatsächliches Lesen aus der einzelnen Speichervorrichtung, wenn eine Leseanforderung dafür von der Anwender-CPU (10) kommend empfangen wird, wodurch der Pufferspeicher (64) in solchen Fällen als Cache-Speicher wirkt; wobei die CPU-Einrichtung (44) aufweist: eine Logik zum sofortigen Bestätigen eines Schreibens in eine der einzelnen Speichervorrichtungen (16), nachdem die zu schreibenden Daten in den Puffer (64) gelegt worden sind, wobei die Anwender-CPU (10) glaubt, daß die Plattenschreiboperation ausgeführt worden ist.

2. Verfahren zum Speichern von digitaler Information in einem Massenspeichervorrichtungsystem für Computer mit der Fähigkeit, verlorene Daten dynamisch und transparent wiederherzustellen, und mit:
(a) einer Vielzahl von ersten einzelnen Speichervorrichtungen (16) zum Speichern der digitalen Information; und
(b) einer zweiten einzelnen Speichervorrichtung (16') zum Speichern von Fehler/Rückgewinnungscodebits; mit den Schritten:
(c) während des Schreibens der digitalen Information in die einzelnen Speichervorrichtungen (16) Erzeugen und Speichern von Fehler/Rückgewinnungscodebits in der zweiten einzelnen Speichervorrichtung (16') nach einem vorher definierten Fehler/Rückgewinnungscodeprüfalgorithmus für die digitale Information an entsprechenden jeweiligen Bitpositionen quer durch die Vielzahl von ersten einzelnen Speichervorrichtungen (16);
(d) Verwenden der Fehler/Rückgewinnungscodebits in Kombination mit dem Inhalt der entsprechenden jeweiligen Bitpositionen quer durch die Vielzahl von ersten einzelnen Speichervorrichtungen (16), um ein irrtümlich geändertes Bit in der digitalen Information nach dem Fehler/Rückgewinnungscodeprüfalgorithmus wiederherzustellen, wenn entweder die erste oder zweite einzelne Speichervorrichtung (16, 16') während der Übertragung der digitalen Information einen Fehler ermittelt;
(e) eine Schnittstelleneinrichtung (46, 56), um Lese- und Schreibanforderungen von einer Anwender-CPU (10, 54) zu empfangen; und
(f) eine Vielzahl von Speichervorrichtungscontrollern (60'), die zwischen die Schnittstelle und jeweilige aus der Vielzahl von Speichervorrichtungen (16) geschaltet sind, um mit der Vielzahl von Speichervorrichtungen (16) zu kommunizieren;
wobei das Verfahren das gleichzeitige Betreiben dieser Speichervorrichtungen (16) umfaßt;
und gekennzeichnet durch die Verwendung eines Pufferspeichers (64) in der Schnittstelleneinrichtung (56) zum Speichern von Schreibanforderungsdaten von der Anwender-CPU (10) und zum Schreiben der Daten aus dem Pufferspeicher (64) in die Vorrichtungscontrollereinrichtung (60') und die Speichervorrichtungen (16) asynchron in Zeit und Ablauf in bezug auf die Schreibanforderungen, wobei die CPU-Einrichtung (44) und der Pufferspeicher (64) geeignet sind, Lese/Schreiboperationen gleichzeitig und asynchron verschiedenen einzelnen Speichervorrichtungen (16) zuzuweisen, die Operationen erwarten, die die Effizienz maximieren; und die Verwendung einer CPU-Einrichtung (44) als Teil der Schnittstelleneinrichtungen (46, 56), wobei die CPU-Einrichtung aufweist: eine Logik (48) zum Prüfen von Daten in dem Pufferspeicher (64) und zum Anzeigen der Daten als solche, die aus einem der einzelnen Speichervorrichtungen (16) gelesen worden sind, oder als solche, die bereits in die Warteschlange eingeordnet worden sind, um in eine der einzelnen Speichervorrichtungen (16) geschrieben zu werden, wobei die Daten aus dem Pufferspeicher (64) gelesen werden ohne tatsächliches Lesen aus der einzelnen Speichervorrichtung, wenn eine Leseanforderung dafür von der Anwender-CPU (10) kommend empfangen wird, wodurch der Pufferspeicher (64) in solchen Fällen als Cache-Speicher wirkt; wobei die CPU-Einrichtung (44) aufweist: eine Logik zum sofortigen Bestätigen eines Schreibens in eine der einzelnen Speichervorrichtungen (16), nachdem die zu schreibenden Daten in den Puffer (64) gelegt worden sind, wobei die Anwender-CPU (10) glaubt, daß die Plattenschreiboperation ausgeführt worden ist.

3. Speichervorrichtungsystem nach Anspruch 1, wobei die Massenspeichervorrichtungen (16) asynchron betriebsfähig und geeignet sind, an ihren Eingangsschnittstellen mit jeweiligen Vorrichtungscontrollern (60') zu kommunizieren, wobei die Vorrichtungscontroller (60') aufweisen: eine Controllerschnittstelleneinrichtung zum Darstellen einer Systemvorrichtungscontrollerschnittstelle für die Eingangsschnittstelle jedes der Massenspeichervorrichtungen (16); und Datenpuffereinrichtungen (68) zum Übertragen von Daten zu und von der Massenspeichervorrichtung (16) umfassen.

4. Virtuelle Massenspeichervorrichtung nach Anspruch 1 oder 3, wobei die Schnittstelleneinrichtung einen einzelnen kommunikationsfähigen Logikabschnitt zum Kommunizieren mit einer Anwender-CPU (10, 54) umfaßt, wobei der kommunikationsfähige Logikabschnitt eine Systemvorrichtungscontrollerschnittstelleneinrichtung (43, 62) zum Kommunizieren mit einem Standardsystemvorrichtungscontroller (14, 60) aufweist, über den die Anwender-CPU (10, 54) mit dem Speichervorrichtungssystem (40) verbunden ist; wobei jede der Speichervorrichtungscontrollereinrichtungen (60') eine Controllerschnittstelleneinrichtung zum Darstellen einer Standardsystemvorrichtungscontrollerschnittstelle für die Eingangsschnittstelle ihrer jeweiligen Speichervorrichtung (16) und einen Datenpuffer (68) zum Übertragen von Daten zu und von seiner jeweiligen Speichervorrichtung (16) aufweist;
wobei der kommunikationsfähige Logikabschnitt einen Steuerabschnitt mit einer CPU-Einrichtung (44) aufweist, der mit der Vielzahl von Speichervorrichtungscontrollereinichtungen (60') betriebsfähig verbunden ist, zum Steuern eines gleichzeitigen Betriebsablaufs der Speichervorrichtungscontrollereinrichtung (60') beim Schreiben von Daten in die und Lesen von Daten aus den Speichervorrichtungen (16); und eine Wiederherstellungseinrichtung (76) aufweist: eine Einrichtung zum Erfassen eines Fehlerzustands aus einer der Massenspeichervorrichtungen (16, 16') bei der Übertragung von Daten und zur Verwendung der Kenntnis davon, welche der Daten der Speichervorrichtungen irrtümlich sind, als Hinweis darauf, welche Bitposition irrtümlich ist, in Kombination mit dem Fehler/Rückgewinnungsbit, das den Daten irrtümlich zugeordnet ist, die das fehlerhafte Bit enthalten, um das fehlerhafte Bit logisch wiederherzustellen.

5. Speichervorrichtungssystem nach Anspruch 1, 3 oder 4, in dem der Fehler/Rückgewinnungscodeprüfalgorithmus ein vorher definierter Paritätsprüfalgorithmus ist und
die Schnittstelleneinrichtung (14, 18, 46, 56, 62) eine Schnittstellendefinitionseinrichtung zum Annehmen von Anforderungen von der Anwender-CPU (10, 54) nach einer ersten Schnittstellenkonvention und zum Übersetzen der Anforderungen in eine zweite Schnittstellenkonvention aufweist, die von der Speichervorrichtungscontrollereinrichtung (60') zum Kommunizieren mit der Vielzahl von Speichervorrichtungen (16) verwendet wird.

6. Speichervorrichtungssystem nach einem der Ansprüche 1, 3, 4 oder 5, wobei:
(a) die Schnittstelleneinrichtung (14, 18, 46, 56, 62) einen Steuerabschnitt (43) mit einer CPU-Einrichtung (44) aufweist, die betriebsfähig mit der Vielzahl von Speichervorrichtungscontrollereinrichtungen (60') verbunden ist, zum Steuern des Betriebsablaufs der Speichervorrichtungscontrollereinrichtungen (60') beim Schreiben von Daten in und Lesen von Daten aus den Speichervorrichtungen (16);
(b) eine Vielzahl von Datenpuffern (68) mit jeweiligen aus der Vielzahl der Speichervorrichtungen (16) verbunden sind, aus denen Daten geschrieben werden und in die Daten gelesen werden in bezug auf die zugeordneten Speichervorrichtungen.

7. Speichervorrichtungssystem nach einem der Ansprüche 1, 3, 4, 5 oder 6 mit einer batteriegesicherten Stromversorgungseinrichtung (78), die mit dem Pufferspeicher (64) betriebsfähig verbunden ist, zum Erhalten der Daten in diesem im Falle eines Stromausfalls im Speichervorrichtungssystem.

8. Verfahren nach Anspruch 2 zum Speichern von digitaler Information in einem Massenspeichersystem mit den Schritten:
Annehmen von Anforderungen von einer Anwender-CPU (10, 54) nach einer ersten Schnittstellenkonvention und Übersetzen der Anforderungen in eine zweite Schnittstellenkonvention, die von den Speichervorrichtungscontrollern (60') zum Kommunizieren mit der Vielzahl von Speichervorrichtungen (16) verwendet wird; und bei Bedarf
Bereitstellen eines Steuerabschnitts (43) als Teil der Schnittstelle, einschließlich der CPU (44), der mit der Vielzahl von Speichervorrichtungscontrollern (60') betriebsfähig verbunden ist, um den Betriebsablauf der Speichervorrichtungscontroller (60') beim Schreiben von Daten in und Lesen von Daten aus den Speichervorrichtungen (16) zu steuern; und bei weiterem Bedarf
Verbinden einer Vielzahl von Datenpuffern (68) mit jeweiligen aus der Vielzahl der Speichervorrichtungen (16), aus denen Daten geschrieben und in die Daten gelesen werden in bezug auf die zugeordnete Speichervorrichtung (16).

9. Verfahren nach Anspruch 8 zur gleichzeitigen Betrieb von mehreren Speichervorrichtungen für Computer von einem einzelnen Anwendervorrichtungscontroller, wobei die Schnittstellendefinitionslogik in der Schnittstelle Anforderungen von dem Anwendervorrichtungscontroller nach der ersten Schnittstellenkonvention annimmt und die Anforderungen in die zweite Schnittstellenkonvention übersetzt, die von den Speichervorrichtungscontrollern (60') verwendet wird.

10. Verfahren nach Anspruch 2, wobei das Speichervorrichtungssystem umfaßt:
einen Steuerabschnitt in der Schnittstelleneinrichtung mit der CPU (44), der betriebsfähig verbunden ist mit der Vielzahl von Speichervorrichtungscontrollern (60'), um den Betriebsablauf der Speichervorrichtungscontroller (60') beim Schreiben von Daten in und Lesen von Daten aus den Speichervorrichtungen (16) zu steuern; und bei weiterem Bedarf
eine Vielzahl von Datenpuffern (68), die mit jeweiligen aus der Vielzahl von Speichervorrichtungen (16) verbunden sind, aus denen Daten geschrieben und in die Daten gelesen werden, und zwar in bezug auf die zugeordnete Speichervorrichtung (16).

11. Speichervorrichtungssystem nach Anspruch 1, wobei die Schnittstelleneinrichtung einen einzelnen kommunikationsfähigen Logikabschnitt zum Kommunizieren mit einer Anwender-CPU (10, 54) aufweist, wobei der kommunikationsfähige Logikabschnitt eine Systemvorrichtungscontrollerschnittstelleneinrichtung zum Kommunizieren mit dem Vorrichtungscontroller (60') aufweist, über den die Anwender-CPU (10, 54) mit der Massenspeichervorrichtung (40) verbunden ist;
wobei die Speichervorrichtungen (16) asynchron betriebsfähig und geeignet sind, mit dem Vorrichtungscontroller (60') an ihren Eingangsschnittstellen zu kommunizieren;
wobei die Speichervorrichtungscontrollereinrichtung (60') zum Kommunizieren zwischen dem kommunikationsfähigen Logikabschnitt und der Vielzahl von Speichervorrichtungen (16) dient, wobei die Vorrichtungscontrollereinrichtung (60') eine Controllerschnittstelleneinrichtung (62) zum Darstellen einer Systemvorrichtungscontrollerschnittstelle für die Eingangsschnittstelle der Massenspeichervorrichtungen (16) aufweist; und umfaßt:
einer Datenpuffereinrichtung (68) zum Übertragen von Daten zu und von den Massenspeichervorrichtungen;
wobei der kommunikationsfähige Logikabschnitt einen Steuerabschnitt mit einer CPU-Einrichtung (44) aufweist, der mit der Vielzahl von Vorrichtungscontrollern (60') betriebsfähig verbunden ist, zum Steuern des Betriebsablaufs der Vorrichtungscontroller (60') beim Schreiben von Daten in und Lesen von Daten aus den Massenspeichervorrichtungen (16).

12. Speichervorrichtungssystem nach Anspruch 11, wobei:
(a) die Datenpuffereinrichtung (68) eine Vielzahl von Datenpuffern (68) aufweist, die mit jeweiligen aus der Vielzahl von Speichervorrichtungen (16) verbunden sind, aus denen Daten geschrieben und in die Daten gelesen werden in bezug auf die zugeordnete Speichervorrichtung (16); und/oder:
(b) die Schnittstelleneinrichtung eine Schnittstellendefinitionseinrichtung zum Annehmen von Anforderungen von der Anwender-CPU (10, 54) nach einer ersten Schnittstellenkonvention und zum Übersetzen der Anforderungen in eine zweite Schnittstellenkovention aufweist, die von der Speichervorrichtungscontrollereinrichtung (60') zum Kommunizieren mit der Vielzahl von Speichervorrichtungen (16) verwendet wird; und/oder:
(c) die Vielzahl von Vorrichtungscontrollern (60'), die Controllerschnittstelleneinrichtung (62), die Datenpuffer (68) und der kommunikationsfähige Logikabschnitt miteinander verbunden sind, um über einen ersten Computerbus (46) miteinander zu kommunizieren, und die Fehler/Rückgewinnungsgeneratorbiteinrichtung (72, 74) und die Wiederherstellungslogikeinrichtung (76) miteinander verbunden sind, um über den zweiten Computerbus (50) miteinander zu kommunizieren.

13. Speichervorrichtungssystem nach Anspruch 1, das umfaßt:
einen einzelnen kommunikationsfähigen Logikabschnitt zum Kommunizieren mit einer Anwender-CPU (10, 54), wobei der kommunikationsfähige Logikabschnitt eine Systemvorrichtungscontrollerschnittstelleneinrichtung (62) zum Kommunizieren mit einem Standardsystemvorrichtungscontroller (60) aufweist, durch den die Anwender-CPU (10, 54) mit der virtuellen Massenspeichervorrichtung (40) verbunden ist;
wobei jeder der Speichervorrichtungscontroller (60') eine Controllerschnittstelleneinrichtung zum Darstellen einer Standardsystemvorrichtungscontrollerschnittstelle für die Eingangsschnittstelle seiner jeweiligen Massenspeichervorrichtung (16) und einen Datenpuffer (68) zum Übertragen von Daten zu und von seiner jeweiligen Massenspeichervorrichtung (16) aufweist;
wobei der kommunikationsfähige Logikabschnitt einen Steuerabschnitt mit einer CPU-Einrichtung (44) aufweist, der betriebsfähig mit der Vielzähl von Vorrichtungscontrollern (60') verbunden ist, zum Steuern eines gleichzeitigen Betriebsablaufs der Vorrichtungscontroller (60') beim Schreiben von Daten in und Lesen von Daten aus den Massenspeichervorrichtungen (16);
wobei die Wiederherstellungslogikeinrichtung (76) aufweist: eine Einrichtung zum Erfassen eines Fehlerzustands von einer der Massenspeichervorrichtungen (16) bei der Übertragung von Daten und zur Verwendung der Kenntnis davon, welche der Daten der Massenspeichervorrichtungen irrtümlich sind, als Hinweis darauf, welche Bitposition irrtümlich ist, in Kombination mit dem Fehler/Rückgewinnungsbit, das den Daten irrtümlich zugeordnet ist, die das fehlerhafte Bit enthalten, um das fehlerhafte Bit logisch wiederherzustellen.

14. Speichervorrichtungssystem nach Anspruch 1, das eine Fehler korrigierende virtuelle Plattenlaufwerksspeichervorrichtung mit hoher Kapazität für einen Computer ist, wobei die Schnittstelleneinrichtung umfaßt:
einen einzelnen kommunikationsfähigen Logikabschnitt zum Kommunizieren mit einer Anwender-CPU (10, 54), wobei der kommunikationsfähige Logikabschnitt eine Plattenlaufwerkscontrollerschnittstelleneinrichtung zum Kommunizieren mit einem Standardplattenlaufwerkscontroller aufweist, durch den die Anwender-CPU mit der virtuellen Pattenlaufwerksspeichervorrichtung verbunden ist;
wobei die Speichervorrichtungen eine Vielzahl von Standardplattenlaufwerken sind, die geeignet sind, mit einem Standardplattenlaufwerkscontroller an ihren Eingangsschnittstelle zu kommunizieren,
wobei die Vielzahl von Speichervorrichtungscontrollereinrichtungen (60') Plattenlaufwerkscontroller sind, wobei jeder der Plattenlaufwerkscontroller aufweist: eine Controllerschnittstelleneinrichtung zum Darstellen einer Standardsystemplattenlaufwerkscontrollerschnittstelle für die Eingangsschnittstelle seines jeweiligen Plattenlaufwerks, einen Datenpuffer (68) zum Übertragen von Daten zu und von seinem jeweiligen Plattenlaufwerk und eine Paritätsgeneratoreinrichtung zum Erzeugen eines Paritätsbits für Gruppen von Bits einer Standardlänge, die an ihr jeweiliges Plattenlaufwerk übertragen werden;
wobei die Erzeugungs- und Speichereinrichtung eine virtuelle Plattenlaufwerksparitätserzeugungseinrichtung zum Erzeugen von Paritätsbits aufweist, die als Teil von Datengruppierungen von Bits zugeordnet sind, die an die Plattenlaufwerke übertragen werden; und
wobei die Wiederherstellungseinrichtung eine Wiederherstellungslogikeinrichtung zum Erfassen eines Paritätsfehlerzustands von einem der Plattenlaufwerke in Kombination mit einem Paritätsfehler in einer der Datengruppierungen von Bits, wie angezeigt durch ein Paritätsbit, das von der virtuellen Plattenlaufwerksparitätserzeugungseinrichtung erzeugt wird, und zur Verwendung der Kenntnis davon ist, welche der Daten der Plattenlaufwerke irrtümlich sind, in Kombination mit dem Paritätsbit, das von der virtuellen Plattenlaufwerksparitätserzeugungseinrichtung erzeugt wird, um ein fehlerhaftes Bit logisch wiederherzustellen, wobei der gemeinsame Paritätsfehlerzustand erzeugt wird,
wobei:
die Datenpuffer in Kombination eine FIFO-Puffereinrichtung zum Halten einer Vielzahl von sequentiellen Datengruppierungen umfassen; und
die Plattenlaufwerkscontroller jeweils eine Datenübertragungslogik zum asynchronen Übertragen jeweiliger aus einer Folge der Datengruppierungen von den jeweiligen Plattenlaufwerken zu den FIFO-Datenpuffereinrichtungen und zum Informieren des Standardplattenlaufwerkscontrollers aufweisen, durch den die Anwender-CPU mit der virtuellen Plattenlaufwerksspeichervorrichtung verbunden ist, daß eine angeforderte Leseoperation nur dann beendet ist, wenn ausreichende der Folgen von Datengruppierungen von allen Plattenlaufwerken gelesen werden, um sicherzustellen, daß die Anwender-CPU die Folge der Datengruppierungen, die von allen Plattenlaufwerken gelesen werden, aus den FIFO-Datenpuffereinrichtungen nicht schneller entfernen kann, als die verbleibenden der Folge der Datengruppierungen, die von allen Plattenlaufwerken gelesen werden, asynchron in die FIFO-Datenpuffereinrichtungen gelesen werden.

15. Speichervorrichtungssystem nach Anspruch 14, wobei:
der Schnittstellenlogikabschnitt einen Steuerabschnitt mit der CPU-Einrichtung (44) aufweist, der betriebsfähig verbunden ist mit der Vielzahl von Plattenlaufwerkscontrollern zum Steuern des Betriebsablaufs der Plattenlaufwerkscontroller beim Schreiben von Daten und Lesen von Daten aus den Plattenlaufwerken; und zusätzlich
die CPU-Einrichtung aufweist: die Logik zum sofortigen Bestätigen eines Schreibens an das zugeordnete Plattenlaufwerk, wenn Daten zu schreiben sind, die in den Datenpuffer (64) gelesen werden, wodurch der Lesedurchsatz der virtuellen Plattenlaufwerksspeichervorrichtung erhöht wird.

16. Speichervorrichtungssystem nach Anspruch 13, wobei:
(a) die Vielzahl von Plattenlaufwerkscontrollern und der kommunikationsfähige Logikabschnitt miteinander verbunden sind, um über einen ersten Computerbus miteinander zu kommunizieren; und
(b) die Controllerschnittstelleneinrichtung, die Datenpuffer, die Paritätsgeneratoreinrichtung der Plattenlaufwerkscontroller miteinander verbunden sind, um über einen zweiten Computerbus miteinander zu kommunizieren.

17. Speichervorrichtungssystem nach Anspruch 14, wobei der kommunikationsfähige Logikabschnitt einen Steuerabschnitt mit der CPU-Einrichtung aufweist, der mit der Vielzahl von Plattenlaufwerkscontrollern betriebsfähig verbunden ist, zum Steuern des Betriebsablaufs des Plattenlaufwerkscontrollers beim Schreiben von Daten in und Lesen von Daten aus den Plattenlaufwerken;
und wobei die CPU-Einrichtung aufweist: die Logik zum sofortigen Bestätigen eines Schreibens in das zugeordnete Plattenlaufwerk, nachdem zu schreibende Daten in den Pufferspeicher gelegt worden sind, wodurch der Lesedurchsatz der virtuellen Plattenlaufwerksspeichervorrichtung erhöht wird.

18. Speichervorrichtungssystem nach Anspruch 17, wobei:
die Vielzahl von Plattenlaufwerkscontrollern und der kommunikationsfähige Logikabschnitt miteinander verbunden sind, um über einen ersten Computerbus miteinander zu kommunizieren; und
die Controllerschnittstelleneinrichtung, die Datenpuffer und die Paritätsgeneratoreinrichtung der Plattenlaufwerkscontroller miteinander verbunden sind, um über einen zweiten Computerbus miteinander zu kommunizieren.

19. Speichervorrichtungssystem nach Anspruch 17, wobei die CPU-Einrichtung aufweist: die Logik zum Prüfen von Daten in dem Pufferspeicher (64) und zum Anzeigen derselben als solche, die aus einem zugeordneten Plattenlaufwerk gelesen worden sind ohne ein tatsächliches Lesen derselben, wenn eine Leseanforderung dafür von einem Anwender kommend empfangen wird, wodurch der Lesedurchsatz der virtuellen Plattenlaufwerksspeichervorrichtung erhöht wird.

20. Speichervorrichtungssystem nach Anspruch 19, wobei:
die Vielzahl von Plattenlaufwerkscontrollern und der kommunikationsfähige Logikabschnitt miteinander verbunden sind, um über einen ersten Computerbus miteinander zu kommunizieren; und
die Controllerschnittstelleneinrichtung, die Datenpuffer und die Paritätsgeneratoreinrichtung der Plattenlaufwerkscontroller miteinander verbunden sind, um über einen zweiten Computerbus miteinander zu kommunizieren.

## Revendications

1. Système de dispositifs de stockage pour des ordinateurs permettant de reconstruire dynamiquement et de façon transparente des données perdues, comprenant:
(a) une pluralité de premiers dispositifs de stockage individuels (16) pour stocker une information numérique;
(b) un second dispositif de stockage individuel (16') pour stocker des bits de code d'erreur/restauration;
(c) un moyen pour générer et stocker des bits de code d'erreur/restauration dans ledit second dispositif de stockage individuel (16') conformément à un algorithme de contrôle de code d'erreur/restauration prédéfini pour ladite information numérique en des positions binaires respectives correspondantes sur ladite pluralité de premiers dispositifs de stockage individuels (16); et
(d) un moyen pour utiliser lesdits bits de code d'erreur/restauration en combinaison avec les contenus desdites positions binaires respectives correspondantes sur ladite pluralité de premiers dispositifs de stockage individuels (16) afin de reconstruire un bit modifié en erreur dans ladite information numérique conformément audit algorithme de contrôle de code d'erreur/restauration lorsque l'un desdits premiers et second dispositifs de stockage individuels (16, 16') détecte une erreur pendant le transfert de ladite information numérique;
(e) un moyen d'interface (46, 56) disposé pour recevoir des requêtes de lecture et d'écriture en provenance d'une CPU utilisateur (10); et
(f) une pluralité de moyens de contrôleur de dispositif de stockage (60') connectés entre ledit moyen d'interface et ceux respectifs de ladite pluralité de dispositifs de stockage (16) pour réaliser un interfaçage avec ladite pluralité de dispositifs de stockage (16) et pour les faire fonctionner concurremment,
caractérisé en ce que ledit moyen d'interface (56) comprend une mémoire tampon (64) pour stocker des données de requêtes d'écriture en provenance de ladite CPU utilisateur (10) et pour écrire lesdites données en provenance de ladite mémoire tampon (64) dans lesdits moyens de contrôleur de dispositif (60') et dans lesdits dispositifs de stockage (16) de façon asynchrone temporellement et en séquence par rapport auxdites requêtes d'écriture, ledit moyen de CPU (44) et ladite mémoire tampon (64) étant conçus pour allouer concurremment et de façon asynchrone des opérations de lecture/écriture aux divers dispositifs de stockage individuels (16) en cherchant des opérations qui maximisent l'efficacité; et ledit moyen d'interface (46, 56) comprenant un moyen de CPU (44), ledit moyen de CPU (44) incluant une logique (48) pour contrôler des données dans ladite mémoire tampon (64) et pour indiquer lesdites données comme ayant été lues à partir de l'un desdits dispositifs de stockage individuels (16) ou comme ayant déjà été mises en file d'attente pour être écrites dans l'un desdits dispositifs de stockage individuels (16), lesdites données étant lues à partir de ladite mémoire tampon (64) sans une lecture réelle à partir dudit dispositif de stockage individuel lorsqu'une requête de lecture afférente est reçue depuis ladite CPU utilisateur (10) de telle sorte que ladite mémoire tampon (64) se comporte en tant que mémoire cache dans de tels cas; ledit moyen de CPU (44) incluant une logique pour accuser réception immédiatement d'une écriture dans l'un desdits dispositifs de stockage individuels (16) suite au fait que les données destinées à être écrites sont placées dans ledit tampon (64), la CPU utilisateur (10) considérant que l'opération d'écriture sur disque a été accomplie.

2. Procédé de stockage d'une information numérique dans un système de dispositifs de stockage en mémoire de masse pour des ordinateurs présentant la capacité de reconstruire dynamiquement et de façon transparente des données perdues et comportant:
(a) une pluralité de premiers dispositifs de stockage individuels (16) pour stocker l'information numérique; et
(b) un second dispositif de stockage individuel (16') pour stocker des bits de code d'erreur/restauration, comprenant:
(c) pendant l'écriture de l'information numérique dans les premiers dispositifs de stockage individuels (16), la génération et le stockage de bits de code d'erreur/restauration dans le second dispositif de stockage individuel (16') conformément à un algorithme de contrôle de code d'erreur/restauration prédéfini pour l'information numérique en des positions binaires respectives correspondantes sur la pluralité de premiers dispositifs de stockage individuels (16);
(d) l'utilisation des bits de code d'erreur/restauration en combinaison avec les contenus des positions binaires respectives correspondantes sur la pluralité de premiers dispositifs de stockage individuels (16) afin de reconstruire un bit modifié en erreur dans l'information numérique conformément à l'algorithme de contrôle de code d'erreur/restauration lorsque l'un des premiers et second dispositifs de stockage individuels (16, 16') détecte une erreur pendant le transfert de l'information numérique;
(e) un moyen d'interface (46, 56) pour recevoir des requêtes de lecture et d'écriture en provenance d'une CPU utilisateur (10, 54); et
(f) une pluralité de contrôleurs de dispositifs de stockage (60') connectés entre l'interface et ceux respectifs de la pluralité de dispositifs de stockage (16) pour réaliser un interfaçage avec la pluralité de dispositifs de stockage (16),
le procédé comprenant le fonctionnement de ces dispositifs de stockage (16) concurremment,
et caractérisé par l'utilisation d'une mémoire tampon (64) dans ledit moyen d'interface (56) pour stocker des données de requêtes d'écriture en provenance de ladite CPU utilisateur (10) et pour écrire lesdites données en provenance de ladite mémoire tampon (64) dans lesdits moyens de contrôleur de dispositif (60') et dans lesdits dispositifs de stockage (16) de façon asynchrone temporellement et en séquence par rapport auxdites requêtes d'écriture, ledit moyen de CPU (44) et ladite mémoire tampon (64) étant conçus pour allouer concurremment et de façon asynchrone des opérations de lecture/écriture aux divers dispositifs de stockage individuels (16) en cherchant des opérations qui maximisent l'efficacité; et par l'utilisation d'un moyen de CPU (44) en tant que partie dudit moyen d'interface (46, 56), ledit moyen de CPU incluant une logique (48) pour contrôler des données dans ladite mémoire tampon (64) et indiquant lesdites données comme ayant été lues à partir de l'un desdits dispositifs de stockage individuels (16) ou comme ayant déjà été mises en file d'attente pour être écrites dans l'un desdits dispositifs de stockage individuels (16), lesdites données étant lues à partir de ladite mémoire tampon (64) sans une lecture réelle à partir dudit dispositif de stockage individuel lorsqu'une requête de lecture afférente est reçue depuis ladite CPU utilisateur (10) de telle sorte que ladite mémoire tampon (64) se comporte en tant que mémoire cache dans de tels cas; ledit moyen de CPU (44) incluant une logique pour accuser réception immédiatement d'une écriture dans l'un desdits dispositifs de stockage individuels (16) suite au fait que les données destinées à être écrites sont placées dans ledit tampon (64), la CPU utilisateur (10) considérant que l'opération d'écriture sur disque a été accomplie.

3. Système de dispositifs de stockage selon la revendication 1, dans lequel les dispositifs de stockage en mémoire de masse (16) peuvent être activés de façon asynchrone et sont adaptés pour réaliser un interfaçage avec des contrôleurs de dispositif respectifs (60') au niveau de leurs interfaces d'entrée, les contrôleurs de dispositif (60') incluant un moyen d'interface de contrôleur pour présenter une interface de contrôleur de dispositif système à ladite interface d'entrée de chaque dit dispositif de stockage en mémoire de masse (16); et comprenant un moyen de tampon de données (68) pour transférer des données sur et depuis ledit dispositif de stockage en mémoire de masse (16).

4. Dispositif de stockage en mémoire de masse virtuel selon la revendication 1 ou 3,
ledit moyen d'interface comprenant une unique partie de logique d'interfaçage pour réaliser un interfaçage avec une CPU utilisateur (10, 54), ladite partie de logique d'interfaçage incluant un moyen d'interface de contrôleur de dispositif système (43, 62) pour réaliser un interfaçage avec un contrôleur de dispositif système standard (14, 60) par l'intermédiaire duquel la CPU utilisateur (10, 54) est connectée au système de dispositifs de stockage (40); chacun desdits moyens de contrôleur de dispositif de stockage (60') incluant un moyen d'interface de contrôleur pour présenter une interface de contrôleur de dispositif système standard à ladite interface d'entrée de son dispositif de stockage respectif (16), et un tampon de données (68) pour transférer des données sur et depuis son dispositif de stockage respectif (16);
ladite partie de logique d'interfaçage incluant une partie de commande comportant un moyen de CPU (44) connecté en fonctionnement à ladite pluralité de moyens de contrôleur de dispositif de stockage (60') pour commander une séquence concurrente d'opérations desdits moyens de contrôleur de dispositif de stockage (60') lors de l'écriture de données et de la lecture de données dans lesdits dispositifs de stockage (16); et un moyen de reconstruction (76) incluant un moyen pour détecter une condition d'erreur à partir de l'un desdits dispositifs de stockage en mémoire de masse (16, 16') lors du transfert de données et pour utiliser la connaissance de celle des données desdits dispositifs de stockage qui est en erreur en tant qu'indication de quelle position binaire est en erreur en combinaison avec ledit bit d'erreur/restauration associé à la donnée en erreur contenant le bit erroné afin de reconstruire logiquement ledit bit erroné.

5. Système de dispositifs de stockage selon la revendication 1, 3 ou 4, dans lequel l'algorithme de contrôle de code d'erreur/restauration est un algorithme de contrôle de parité prédéfini et ledit moyen d'interface (14, 18, 46, 56, 62) inclut un moyen de définition d'interface pour accepter des requêtes en provenance d'une CPU utilisateur (10, 54) conformément à une première convention d'interface et pour transposer lesdites requêtes selon une seconde convention d'interface utilisée par lesdits moyens de contrôleur de dispositif de stockage (60') pour réaliser un interfaçage avec ladite pluralité de dispositifs de stockage (16).

6. Système de dispositifs de stockage selon l'une quelconque des revendications 1, 3, 4 ou 5, dans lequel:
(a) ledit moyen d'interface (14, 18, 46, 56, 62) inclut une partie de commande (43) comportant un moyen de CPU (44) connecté en fonctionnement à ladite pluralité de moyens de contrôleur de dispositif de stockage (60') pour commander la séquence d'opérations desdits moyens de contrôleur de dispositif de stockage (60') lors de l'écriture de données et de la lecture de données dans lesdits dispositifs de stockage (16);
(b) une pluralité de tampons de données (68) sont connectés à ceux respectifs de ladite pluralité de dispositifs de stockage (16), tampons à partir desquels des données sont écrites et dans lesquels des données sont lues en relation avec le dispositif associé desdits dispositifs de stockage.

7. Système de dispositifs de stockage selon l'une quelconque des revendications 1, 3, 4, 5 ou 6, comprenant un moyen d'alimentation de secours à accumulateur (78) connecté en fonctionnement à ladite mémoire tampon (64) pour maintenir les données dedans dans l'éventualité d'une défaillance d'alimentation sur le système de dispositifs de stockage.

8. Procédé selon la revendication 2 de stockage d'une information numérique dans un système de stockage en mémoire de masse, comprenant:
l'acceptation de requêtes en provenance d'une CPU utilisateur (10, 54) conformément à une première convention d'interface et la transposition des requêtes selon une seconde convention d'interface utilisée par les contrôleurs de dispositif de stockage (60') pour réaliser un interfaçage avec la pluralité de dispositifs de stockage (16); et si on le souhaite
la constitution d'une partie de commande (43) en tant que partie de l'interface incluant ladite CPU (44) connectée en fonctionnement à la pluralité de contrôleurs de dispositif de stockage (60') afin de commander la séquence d'opérations des contrôleurs de dispositif de stockage (60') lors de l'écriture de données et de la lecture de données dans les dispositifs de stockage (16); et si on le souhaite en outre,
la connexion d'une pluralité de tampons de données (68) à ceux respectifs de la pluralité de dispositifs de stockage (16), tampons à partir desquels des données sont écrites et dans lesquels des données sont lues en relation avec le dispositif de stockage associé (16).

9. Procédé selon la revendication 8 de fonctionnement concurrent de multiples dispositifs de stockage pour des ordinateurs à partir d'un unique contrôleur de dispositif utilisateur, où la logique de définition d'interface dans l'interface accepte des requêtes en provenance du contrôleur de dispositif utilisateur conformément à la première convention d'interface et transpose les requêtes selon la seconde convention d'interface utilisée par les contrôleurs de dispositif de stockage (60').

10. Procédé selon la revendication 2, dans lequel le système de dispositifs de stockage comprend:
une partie de commande dans le moyen d'interface comportant ladite CPU (44) connectée en fonctionnement à la pluralité de contrôleurs de dispositif de stockage (60') pour commander la séquence d'opérations des contrôleurs de dispositif de stockage (60') lors de l'écriture de données et de la lecture de données dans les dispositifs de stockage (16); et si on le souhaite en outre
une pluralité de tampons de données (68) connectés à ceux respectifs de la pluralité de dispositifs de stockage (16), tampons à partir desquels des données sont écrites et dans lesquels des données sont lues en relation avec le dispositif de stockage associé (16).

11. Système de dispositifs de stockage selon la revendication 1, le moyen d'interface comprenant une unique partie de logique d'interfaçage pour réaliser un interfaçage avec une CPU utilisateur (10, 54), ladite partie de logique d'interfaçage incluant un moyen d'interface de contrôleur de dispositif système pour réaliser un interfaçage avec un contrôleur de dispositif (60') par l'intermédiaire duquel la CPU utilisateur (10, 54) est connectée au dispositif de stockage en mémoire de masse (40);
les dispositifs de stockage (16) pouvant être activés de façon asynchrone et pouvant être adaptés pour réaliser un interfaçage avec un dit contrôleur de dispositif (60') au niveau de l'interface d'entrée afférente;
les moyens de contrôleur de dispositif de stockage (60') étant pour une connexion entre ladite partie de logique d'interfaçage et ladite pluralité de dispositifs de stockage (16), lesdits moyens de contrôleur de dispositif (60') incluant un moyen d'interface de contrôleur (62) pour présenter une interface de contrôleur de dispositif système à ladite interface d'entrée desdits dispositifs de stockage en mémoire de masse (16); et comprenant:
un moyen de tampon de données (68) pour transférer des données sur et depuis lesdits dispositifs de stockage en mémoire de masse;
ladite partie de logique d'interfaçage incluant une partie de commande comportant un moyen de CPU (44) connecté en fonctionnement à ladite pluralité de contrôleurs de dispositif (60') pour commander la séquence d'opérations desdits contrôleurs de dispositif (60') lors de l'écriture de données et de la lecture de données dans lesdits dispositifs de stockage en mémoire de masse (16).

12. Système de dispositifs de stockage selon la revendication 11, dans lequel:
(a) ledit moyen de tampon de données (68) comprend une pluralité de tampons de données (68) connectés à ceux respectifs de ladite pluralité de dispositifs de stockage (16), tampons depuis lesquels des données sont écrites et dans lesquels des données sont lues en relation avec ledit dispositif de stockage associé (16); et/ou
(b) ledit moyen d'interface inclut un moyen de définition d'interface pour accepter des requêtes en provenance d'une CPU utilisateur (10, 54) conformément à une première convention d'interface et pour transposer lesdites requêtes selon une seconde convention d'interface utilisée par lesdits moyens de contrôleur de dispositif de stockage (60') pour réaliser un interfaçage avec ladite pluralité de dispositifs de stockage (16); et/ou
(c) les contrôleurs de ladite pluralité de contrôleurs de dispositif (60'), ledit moyen d'interface de contrôleur (62), lesdits tampons de données (68) et ladite partie de logique d'interfaçage sont interconnectés afin de communiquer les uns avec les autres sur un premier bus d'ordinateur (46) et ledit moyen binaire de générateur d'erreur/restauration (72, 74) et ledit moyen de logique de reconstruction (76) sont interconnectés afin de communiquer l'un avec l'autre sur un second bus d'ordinateur (50).

13. Système de dispositifs de stockage selon la revendication 1, comprenant:
une unique partie de logique d'interfaçage pour réaliser un interfaçage avec une CPU utilisateur (10, 54), ladite partie de logique d'interfaçage incluant un moyen d'interface de contrôleur de dispositif système (62) pour réaliser un interfaçage avec un contrôleur de dispositif système standard (60) par l'intermédiaire duquel la CPU utilisateur (10, 54) est connectée au dispositif de stockage en mémoire de masse virtuel (40);
chacun des contrôleurs de dispositif de stockage (60') incluant un moyen d'interface de contrôleur pour présenter une interface de contrôleur de dispositif système standard à ladite interface d'entrée du dispositif de stockage en mémoire de masse respectif (16) et un tampon de données (68) pour transférer des données sur et depuis le dispositif de stockage afférent respectif (16);
ladite partie de logique d'interfaçage incluant une partie de commande comportant un moyen de CPU (44) connecté en fonctionnement à ladite pluralité de contrôleurs de dispositif (60') pour commander une séquence concurrente d'opérations desdits contrôleurs de dispositif (60') lors de l'écriture de données et lors de la lecture de données dans lesdits dispositifs de stockage en mémoire de masse (16);
ledit moyen de logique de reconstruction (76) incluant un moyen pour détecter une condition d'erreur à partir de l'un desdits dispositifs de stockage en mémoire de masse (16) lors du transfert de données et pour utiliser la connaissance de quelle donnée desdits dispositifs de stockage en mémoire de masse est en erreur en tant qu'indication de quelle position binaire est en erreur en combinaison avec ledit bit d'erreur/restauration associé à la donnée en erreur contenant le bit erroné afin de reconstruire logiquement ledit bit erroné.

14. Système de dispositifs de stockage selon la revendication 1, qui est un dispositif de stockage à unité de disque virtuelle à correction d'erreur haute capacité pour un ordinateur, le moyen d'interface comprenant:
une unique partie de logique d'interfaçage pour réaliser un interfaçage avec une CPU utilisateur (10, 54), la partie de logique d'interfaçage incluant un moyen d'interface de contrôleur d'unité de disque pour réaliser un interfaçage avec un contrôleur d'unité de disque standard par l'intermédiaire duquel la CPU utilisateur est connectée au dispositif de stockage à unité de disque virtuelle;
les dispositifs de stockage étant une pluralité d'unités de disque standards adaptées pour réaliser un interfaçage avec un contrôleur d'unité de disque standard au niveau de l'interface d'entrée afférente;
les moyens de contrôleur de la pluralité de moyens de contrôleur de dispositif de stockage (60') étant des contrôleurs d'unité de disque, chacun des contrôleurs d'unité de disque incluant un moyen d'interface de contrôleur pour présenter une interface de contrôleur d'unité de disque système standard à l'interface d'entrée de l'unité de disque afférente respective, un tampon de données (68) pour transférer des données sur et depuis l'unité de disque afférente respective et un moyen de générateur de parité pour générer un bit de parité pour des groupes de bits de longueur standard qui sont transférés jusqu'à l'unité de disque afférente respective;
le moyen de génération et de stockage comprenant un moyen de génération de parité d'unité de disque virtuelle pour générer des bits de parité associés en tant que partie de groupages de données de bits qui sont transférées aux unités de disque; et
le moyen de reconstruction étant un moyen de logique de reconstruction pour détecter une condition d'erreur de parité à partir de l'une des unités de disque en combinaison avec une erreur de parité dans l'un des groupages de données de bits comme indiqué par un bit de parité généré par le moyen de génération de parité d'unité de disque virtuelle et pour utiliser la connaissance de quelle donnée des unités de disque est en erreur en combinaison avec le bit de parité généré par le moyen de génération de parité d'unité de disque virtuelle afin de reconstruire logiquement un bit erroné créant la condition d'erreur de parité de jonction,
dans lequel:
les tampons de données en combinaison constituent un moyen de tampon FIFO pour contenir une pluralité de groupages de données séquentiels; et
les contrôleurs d'unité de disque incluent chacun une logique de transfert de données pour transférer ceux respectifs d'une séquence des groupages de données depuis leurs unités de disque respectives dans ledit moyen de tampon de données FIFO de façon asynchrone et pour informer le contrôleur d'unité de disque standard par l'intermédiaire duquel la CPU utilisateur est connectée au dispositif de stockage d'unité de disque virtuelle du fait qu'une opération de lecture demandée en requête est terminée seulement lorsqu'il y a ceux suffisants de la séquence des groupages de données qui sont lus à partir de toutes les unités de disque pour assurer que la CPU utilisateur ne peut pas ôter la séquence des groupages de données qui sont lus à partir de toutes les unités de disque hors dudit moyen de tampon de données FIFO plus rapidement que ceux restants de la séquence des groupages de données qui sont lus à partir de toutes les unités de disque sont lus de façon asynchrone dans ledit moyen de tampon de données FIFO.

15. Système de dispositifs de stockage selon la revendication 14, dans lequel:
la partie de logique d'interface inclut une partie de commande comportant ledit moyen de CPU (44) connecté en fonctionnement à la pluralité de contrôleurs d'unité de disque pour commander la séquence d'opérations des contrôleurs d'unité de disque lors de l'écriture de données et lors de la lecture de données dans les unités de disque; et additionnellement
ledit moyen de CPU inclut ladite logique pour accuser réception immédiatement d'une écriture sur l'unité de disque associée suite au fait que des données à écrire sont placées dans ladite mémoire tampon (64) de telle sorte que le débit de lecture du dispositif de stockage à unité de disque virtuelle soit augmenté.

16. Système de dispositifs de stockage selon la revendication 13, dans lequel:
(a) les contrôleurs la pluralité de contrôleurs d'unité de disque et la partie de logique d'interface sont interconnectées afin de communiquer les uns avec les autres sur un premier bus d'ordinateur; et
(b) le moyen d'interface de contrôleur, les tampons de données et le moyen de générateur de parité des contrôleurs d'unité de disque sont interconnectés afin de communiquer les uns avec les autres sur un second bus d'ordinateur.

17. Système de dispositifs de stockage selon la revendication 14, la partie de logique d'interfaçage incluant une partie de commande comportant ledit moyen de CPU connecté en fonctionnement à la pluralité de contrôleurs d'unité de disque pour commander la séquence d'opérations des contrôleurs d'unité de disque lors de l'écriture de données et lors de la lecture de données dans les unités de disque; et
et dans lequel:
ledit moyen de CPU inclut ladite logique pour accuser réception immédiatement d'une écriture sur l'unité de disque associée suite au fait que des données destinées à être écrites sont placées dans ladite mémoire tampon de telle sorte qu'un débit de lecture du dispositif de stockage à unité de disque virtuelle soit augmenté.

18. Système de dispositifs de stockage selon la revendication 17, dans lequel:
les contrôleurs de la pluralité de contrôleurs d'unité de disque et la partie de logique d'interfaçage sont interconnectés afin de communiquer les uns avec les autres sur un premier bus d'ordinateur; et
les moyens d'interface de contrôleur, les tampons de données et les moyens de générateur de parité des contrôleurs d'unité de disque sont interconnectés afin de communiquer les uns avec les autres sur un second bus d'ordinateur.

19. Système de dispositifs de stockage selon la revendication 17, dans lequel ledit moyen de CPU comprend ladite logique pour contrôler des données dans ladite mémoire tampon (64) et pour les indiquer comme ayant été lues à partir d'une unité de disque associée sans leur lecture réelle lorsqu'une requête de lecture afférente est reçue depuis un utilisateur de telle sorte qu'un débit de lecture du dispositif de stockage à unité de disque virtuelle soit augmenté.

20. Système de dispositifs de stockage selon la revendication 19, dans lequel:
les contrôleurs de la pluralité de contrôleurs d'unité de disque et la partie de logique d'interfaçage sont interconnectés afin de communiquer les uns avec les autres sur un premier bus d'ordinateur; et
les moyens d'interface de contrôleur, les tampons de données et les moyens de générateur de parité des contrôleurs d'unité de disque sont interconnectés afin de communiquer les uns avec les autres sur un second bus d'ordinateur.
